# EUROPEAN PATENT APPLICATION

(11) **EP 3 968 554 A1**
(43) Date of publication of application: **16.03.2022**
(21) Application number: 20815160.5
(22) Date of filing: 05.03.2020
(51) Int. Cl.: H04L 1/18

(54) **METHOD AND APPARATUS USED FOR RETRANSMISSION**

(30) Priority: 27.05.2019 CN 201910447325
(71) Applicant: HUAWEI TECHNOLOGIES CO., LTD., Shenzhen, Guangdong 518129 (CN)
(72) Inventor: LI, Yunbo, Shenzhen, Guangdong 518129 (CN); YU, Jian, Shenzhen, Guangdong 518129 (CN); YAN, Zhongjiang, Shenzhen, Guangdong 518129 (CN); YANG, Mao, Shenzhen, Guangdong 518129 (CN)
(74) Representative: Maiwald Patent- und Rechtsanwaltsgesellschaft mbH
(86) International application number: PCT/CN2020/077876
(87) International publication number: WO 2020/238314

(57) **Abstract**

This application provides a retransmission method and apparatus. This helps reduce signaling overheads. The method includes: A first device generates a BA frame, where a first value of an acknowledgment type field and a second value of a traffic identifier field in the BA frame are used to jointly indicate that all MPDUs included in an A-MPDU are incorrectly received; and the first device sends the BA frame to a second device. For example, the method may be applied to a WLAN system.

## Description

This application claims priority to Chinese Patent Application No. 201910447325.7, filed with the China National Intellectual Property Administration on May 27, 2019 and entitled "RETRANSMISSION METHOD AND APPARATUS", which is incorporated herein by reference in its entirety.

### TECHNICAL FIELD

This application relates to the communications field, and more specifically, to a retransmission method and apparatus in the communications field.

### BACKGROUND

In a communications system, signal transmission fails due to time-varying features and multi-path fading of wireless channels. For example, in a wireless local area network (wireless local area network, WLAN), when a second device sends an aggregated media access control protocol data unit (aggregated MAC protocol data unit, A-MPDU) to a first device, the first device needs to feed back a receiving status of the A-MPDU to the second device. When the A-MPDU is aggregated by a plurality of access control protocol data units (protocol data unit, MPDU), and the plurality of MPDUs are all incorrectly received, a plurality of bits are required to indicate receiving statuses of the MPDUs when the first device feeds back. This causes relatively large signaling overheads.

### SUMMARY

This application provides a retransmission method and apparatus. This helps reduce signaling overheads.

According to a first aspect, a data transmission method is provided, including: A first device generates a block acknowledgment BA frame, where a first value of an acknowledgment type field and a second value of a traffic identifier field in the BA frame are used to jointly indicate that all media access control protocol data units MPDUs included in an aggregated media access control protocol data unit A-MPDU received by the first device are incorrectly received; and the first device sends the BA frame to a second device.

Therefore, in this embodiment of this application, the first value of the acknowledgment type field and the second value of the traffic identifier field in the BA frame may be used to jointly indicate that all the MPDUs included in the A-MPDU are incorrectly received, so that retransmission is performed based on the BA frame. This avoids signaling overheads caused by a plurality of bits required to indicate that all the MPDUs included in the A-MPDU are incorrectly received.

In some possible implementations, the BA frame is a multi-station BA (Multi-STA BA) frame.

For example, one A-MPDU includes 10 MPDUs. In the conventional technology, at least 10 bits are required to indicate that the 10 MPDUs are all incorrectly received. In this application, the acknowledgment type field may be one bit, the traffic identifier field may be one bit, and the two bits are all that is needed to indicate that all the MPDUs included in the A-MPDU are incorrectly received. For another example, it is assumed that in the conventional technology, a block acknowledgment bitmap field of a fixed size is used to indicate that all the MPDUs included in the A-MPDU are incorrectly received. In this case, regardless of whether all or some of the MPDUs included in the A-MPDU are incorrectly received, signaling of a fixed size is required for indication. On the contrary, in this embodiment of this application, the first value of the acknowledgment type field and the second value of the traffic identifier field are used to indicate that all the MPDUs included in the A-MPDU are incorrectly received. A bit map is not used to separately indicate each MPDU. Therefore, this can reduce signaling overheads.

In some possible implementations, the first device is a station, and the second device is an access point.

In some possible implementations, the first device is an access point, and the second device is a station.

In some possible implementations, the first device is a station, and the second device is a station.

In some possible implementations, the first device is an access point, and the second device is an access point.

In some possible implementations, before the first device generates the BA frame, the method further includes: The first device receives a physical layer protocol data unit PPDU sent by the second device, where the PPDU includes a physical layer preamble and the A-MPDU. To be specific, the second device sends the PPDU to the first device, and the first device does not correctly receive any MPDU in the A-MPDU. In this way, the first device may respond to the PPDU sent by the second device by using the BA frame.

In some possible implementations, the physical layer preamble in the PPDU includes a first hybrid automatic repeat request HARQ field, and an address field in the first HARQ field is used to indicate to the first device whether the PPDU is sent to the first device. In this way, the first device determines, based on the address field, whether the PPDU is sent to the first device. The address field is used to carry an address of the first device and/or an address of the second device.

In some possible implementations, a response manner field in the first HARQ field is used to indicate a manner in which the first device responds to the A-MPDU. In this way, the first device determines, based on the response manner field, the manner in which the first device responds to the A-MPDU. The manner in which the first device responds to the A-MPDU may be a first response manner or a second response manner. The first response manner may be that the first device responds upon receiving a short interframe space (short interframe space, SIFS) of the PPDU. The second response manner may be that the first device does not respond after receiving the SIFS of the PPDU, but sends the BA frame to the second device after receiving a block acknowledgment request (block acknowledgment request, BAR).

In some possible implementations, the PPDU is an SU PPDU, and the first HARQ field is located between an NG-SIG-A and an NG-STF in the physical layer preamble in the PPDU. Two separate CRC checks are performed on the NG-SIG-A and an NG-SIG-B. The NG-SIG-B appears in the PPDU only when HARQ transmission needs to be performed by using the first HARQ field. When HARQ transmission does not need to be performed, the NG-SIG-B does not appear in the PPDU. This can reduce signaling overheads.

In some possible implementations, the PPDU is an SU PPDU, and the second device may indicate, by using a specific bit in an NG-SIG-A, whether an NG-SIG-B appears in the PPDU, or may use another manner to indicate whether an NG-SIG-B appears in the PPDU.

In some possible implementations, the PPDU is an SU PPDU, and the first HARQ field is located in an NG-SIG-A in the physical layer preamble in the PPDU. In this way, the CRC check needs to be performed only once on the first HARQ field and the NG-SIG-A. This can reduce check complexity.

In some possible implementations, the PPDU is an SU PPDU, and the first HARQ field is located between a next-generation long training field NG-LTF in the physical layer preamble in the PPDU and the A-MPDU in the PPDU.

In some possible implementations, the PPDU is an SU PPDU, and the address field includes the address of the first device and the address of the second device.

In some possible implementations, the PPDU is an MU PPDU, and the first HARQ field is located between a next-generation long training field NG-LTF in the physical layer preamble in the PPDU and the A-MPDU in the PPDU. An NG-SIG-C appears in the PPDU only when HARQ transmission needs to be performed by using the first HARQ field. When HARQ transmission does not need to be performed, the NG-SIG-C does not appear in the PPDU. This can reduce signaling overheads. In addition, when the NG-SIG-C is located between the NG-LTF and the A-MPDU, channel resources can be used efficiently.

In some possible implementations, the PPDU is an MU PPDU, and the second device may indicate, by using a specific bit in an NG-SIG-A or an NG-SIG-B, whether an NG-SIG-C appears in the PPDU, or may use another manner to indicate whether an NG-SIG-C appears in the PPDU. In this way, the first device may determine, based on the specific bit in the NG-SIG-A or the NG-SIG-B or in another indication manner, whether the NG-SIG-C exists in the PPDU.

In some possible implementations, the PPDU is an MU PPDU, and the first HARQ field is located in a user information field in a next-generation signal field NG-SIG-B in the physical layer preamble in the PPDU. In this way, the CRC check needs to be performed only once on the first HARQ field and the NG-SIG-B. This can reduce check complexity.

In some possible implementations, a STA-ID field in the user information field and the address field in the first HARQ field are used to indicate to the first device whether the PPDU is sent to the first device. In this way, the first device determines, based on the STA-ID field and the address field in the first HARQ field, whether the PPDU is sent to the first device. When the first device determines that the PPDU is sent to the first device, even if all the MPDUs in the A-MPDU in the PPDU are incorrectly received, the first device still needs to send the BA frame to the second device.

In some possible implementations, a value of the STA-ID field is a plurality of bits of an association identifier AID of the first device, and a value of the address field in the first HARQ field is an address of the second device. In this way, the first device may determine, based on the address of the second device, that the PPDU is sent by the second device associated with the first device, and the first device further matches the value of the STA-ID field with the plurality of bits of the AID of the first device. If matching succeeds, the first device may determine that the PPDU is sent by the second device to the first device.

In some possible implementations, a value of the STA-ID field is a plurality of bits of an association identifier AID of the second device, and a value of the address field in the first HARQ field is an address of the second device. When receiving the PPDU, the first device determines, based on the address of the second device in the address field, that the PPDU is sent by an associated second device, and matches the value of the STA-ID field with a plurality of bits of an AID of the associated second device. If matching succeeds, the first device may determine that the PPDU is sent by the associated second device.

In some possible implementations, a value of the STA-ID field is a plurality of bits of an association identifier AID of the second device, and a value of the address field in the first HARQ field is an address of the first device. When receiving the PPDU, the first device may determine, based on the address of the first device in the address field, that the PPDU is sent to the first device, and the first device further matches the value of the STA-ID field with the plurality of bits of the associated second device. If matching succeeds, the first device may determine that the PPDU is sent by the second device to the first device.

In some possible implementations, the PPDU is a trigger basic TB PPDU, the PPDU includes a second HARQ field, and the second HARQ field is used to indicate to the first device whether the second device has sent the PPDU. In this way, the first device determines, based on the second HARQ field, whether the second device has sent the TB PPDU. In other words, if the first device detects the second HARQ field or any element in the second HARQ field, it is considered that the second device has sent the PPDU. The second HARQ field is located between a next-generation long training field NG-LTF in a physical layer preamble in the PPDU and the A-MPDU in the PPDU. In this way, channel resources can be used efficiently.

In some possible implementations, an address field in the second HARQ field does not exist. Alternatively, an address field in the second HARQ field may include only an address of the second device. Alternatively, an address field in the second HARQ field includes both an address of the first device and an address of the second device.

In some possible implementations, a response manner field in the second HARQ field is used to indicate a manner in which the first device responds to the A-MPDU. In this way, the first device determines, based on the response manner field in the second HARQ field, the manner in which the first device responds to the A-MPDU.

In some possible implementations, the PPDU is a TB PPDU, and an NG-STF and/or an NG-LTF in the PPDU are/is used to indicate to the first device that the second device has sent the TB PPDU. In this way, the first device determines, based on the NG-STF and/or the NG-LTF, that the second device has sent the TB PPDU. If the first device detects at least one or both of the NG-STF and the NG-LTF in a signal synchronization manner or energy detection manner, the first device may determine that the second device has sent the TB PPDU. In this way, even if all the MPDUs included in the A-MPDU received by the first device are incorrectly received, the first device still needs to send the BA frame to the second device.

In some possible implementations, the PPDU is a TB PPDU, and at least one MPDU delimiter in the A-MPDU is used to indicate to the first device that the second device has sent the TB PPDU. In this way, the first device determines, based on the at least one MPDU delimiter in the A-MPDU, that the second device has sent the TB PPDU. When all the MPDUs included in the A-MPDU received by the first device are incorrectly received, but the first device detects one or more MPDU delimiters, the first device may consider that the second device has sent the TB PPDU. In this case, the first device needs to reply to the second device with the BA frame.

In some possible implementations, a block acknowledgment starting sequence control field in the BA frame is used to indicate at least one of a reason why all the MPDUs included in the A-MPDU are incorrectly received, a redundancy version used for next transmission, and a modulation and coding scheme order used for next transmission.

In this way, when receiving the BA frame, the second device may determine, based on a reason indication in the block acknowledgment starting sequence control field in the BA frame, the reason why all the MPDUs are incorrectly received by the first device, and perform HARQ retransmission based on the reason. For example, if the reason for all incorrectly receiving is a collision, there is a low probability that the collision occurs again. Therefore, the second device may perform HARQ retransmission by using a previous modulation scheme. When receiving the block acknowledgment starting sequence control field in the BA frame, the second device may determine a target redundancy version for retransmission based on the redundancy version used for next transmission. When receiving the block acknowledgment starting sequence control field in the BA frame, the second device may determine a modulation and coding scheme order for retransmission based on the modulation and coding scheme order for next transmission.

According to a second aspect, a data transmission method is provided, including: A second device receives a block acknowledgment BA frame sent by a first device, where a first value of an acknowledgment type field and a second value of a traffic identifier field in the BA frame are used to jointly indicate that all media access control protocol data units MPDUs included in an aggregated media access control protocol data unit A-MPDU received by the first device are incorrectly received; and
the second device performs hybrid automatic repeat request HARQ retransmission based on the BA frame.

In some possible implementations, before a second device receives a BA frame sent by a first device, the method further includes: The second device sends a physical layer protocol data unit PPDU to the first device, where the PPDU includes a physical layer preamble and the A-MPDU.

In some possible implementations, the physical layer preamble in the PPDU includes a first HARQ field, and an address field in the first HARQ field is used to indicate to the first device whether the PPDU is sent to the first device.

In some possible implementations, a response manner field in the first HARQ field is used to indicate a manner in which the first device determines to respond to the A-MPDU.

In some possible implementations, the PPDU is a single user SU PPDU; and the first HARQ field is located between a next-generation signal field NG-SIG-A and a next-generation short training field NG-STF in the physical layer preamble in the PPDU, the first HARQ field is located in an NG-SIG-A in the physical layer preamble in the PPDU, or the first HARQ field is located between a next generation long training field NG-LTF in the physical layer preamble in the PPDU and the A-MPDU in the PPDU.

In some possible implementations, the address field includes an address of the first device and an address of the second device.

In some possible implementations, the PPDU is a multi-user MU PPDU; and the first HARQ field is located between a next-generation long training field NG-LTF in the physical layer preamble in the PPDU and the A-MPDU in the PPDU, or the first HARQ field is located in a user information field in a next-generation signal field NG-SIG-B in the physical layer preamble in the PPDU.

In some possible implementations, a STA-ID field in the user information field and the address field in the first HARQ field are used to indicate to the first device whether the PPDU is sent to the first device.

In some possible implementations, a value of the STA-ID field is a plurality of bits of an association identifier AID of the first device, and a value of the address field in the first HARQ field is an address of the second device; a value of the STA-ID field is a plurality of bits of an AID of the second device, and a value of the address field in the first HARQ field is an address of the second device; or a value of the STA-ID field is a plurality of bits of an AID of the second device, and a value of the address field in the first HARQ field is an address of the first device.

In some possible implementations, the PPDU is a trigger basic TB PPDU, the PPDU includes a second HARQ field, the second HARQ field is used to indicate to the first device whether the second device has sent the PPDU, and the second HARQ field is located between a next-generation long training field NG-LTF in the physical layer preamble in the PPDU and the A-MPDU in the PPDU.

In some possible implementations, a response manner field in the second HARQ field is used to indicate a manner in which the first device responds to the A-MPDU.

In some possible implementations, the PPDU is a TB PPDU, and an NG-STF and/or an NG-LTF in the PPDU are/is used to indicate to the first device that the second device has sent the TB PPDU.

In some possible implementations, the PPDU is a TB PPDU, and at least one MPDU delimiter in the A-MPDU is used to indicate to the first device that the second device has sent the PPDU.

In some possible implementations, a block acknowledgment starting sequence control field in the BA frame is used to indicate at least one of a reason why all the MPDUs included in the A-MPDU are incorrectly received, a redundancy version used for next transmission, and a modulation and coding scheme order used for next transmission.

According to a third aspect, a retransmission method is provided, including: A first device receives a PPDU sent by a second device, where a physical layer preamble in the PPDU includes a HARQ field.

In some possible implementations, if the PPDU is a single user SU PPDU, the HARQ field is located between a next-generation signal field NG-SIG-A and a next-generation short training field NG-STF in the physical layer preamble in the PPDU, the HARQ field is located in an NG-SIG-A in the physical layer preamble in the PPDU, or the HARQ field is located between a next-generation long training field NG-LTF in the physical layer preamble in the PPDU and an aggregated media access control protocol data unit A-MPDU included in the PPDU.

In some possible implementations, if the PPDU is a multi-user MU PPDU, the HARQ field is located between the NG-LTF in the physical layer preamble in the PPDU and the A-MPDU in the PPDU, or the HARQ field is located in a user information field in a next-generation signal field NG-SIG-B in the physical layer preamble in the PPDU.

In some possible implementations, if the PPDU is a trigger basic TB PPDU, the HARQ field is located between the NG-LTF in the physical layer preamble in the PPDU and the A-MPDU in the PPDU.

In some possible implementations, a response manner field in the HARQ field is used to indicate a manner in which the first device responds to the A-MPDU.

In some possible implementations, if the PPDU is a single user SU PPDU, an address field in the HARQ field includes an address of the first device and an address of the second device.

In some possible implementations, if the PPDU is a multi-user MU PPDU, a value of the address field in the HARQ field is the address of the second device, or a value of the address field in the HARQ field is the address of the first device.

According to a fourth aspect, a retransmission method is provided, including: A second device sends a PPDU to a first device, where a physical layer preamble in the PPDU includes a HARQ field.

In some possible implementations, if the PPDU is a single user SU PPDU, the HARQ field is located between a next-generation signal field NG-SIG-A and a next-generation short training field NG-STF in the physical layer preamble in the PPDU, the HARQ field is located in an NG-SIG-A in the physical layer preamble in the PPDU, or the HARQ field is located between a next-generation long training field NG-LTF in the physical layer preamble in the PPDU and an aggregated media access control protocol data unit A-MPDU included in the PPDU.

In some possible implementations, if the PPDU is a multi-user MU PPDU, the HARQ field is located between the NG-LTF in the physical layer preamble in the PPDU and the A-MPDU in the PPDU, or the HARQ field is located in a user information field in a next-generation signal field NG-SIG-B in the physical layer preamble in the PPDU.

In some possible implementations, if the PPDU is a trigger basic TB PPDU, the HARQ field is located between the NG-LTF in the physical layer preamble in the PPDU and the A-MPDU in the PPDU.

In some possible implementations, a response manner field in the HARQ field is used to indicate a manner in which the first device responds to the A-MPDU.

In some possible implementations, if the PPDU is a single user SU PPDU, an address field in the HARQ field includes an address of the first device and an address of the second device.

In some possible implementations, if the PPDU is a multi-user MU PPDU, a value of the address field in the HARQ field is the address of the second device, or a value of the address field in the HARQ field is the address of the first device.

According to a fifth aspect, a retransmission method is provided, including: A first device receives a PPDU sent by a second device, where a physical layer preamble in the PPDU includes a HARQ field, and a response manner field in the HARQ field is used to indicate a manner in which the first device responds to an A-MPDU. The manner of responding to the A-MPDU may be the foregoing first response manner or the foregoing second response manner.

According to a sixth aspect, a retransmission method is provided, including: A second device sends a PPDU to a first device, where a physical layer preamble in the PPDU includes a HARQ field, and a response manner field in the HARQ field is used to indicate a manner in which the first device responds to the A-MPDU. The manner of responding to the A-MPDU may be the foregoing first response manner or the foregoing second response manner.

According to a seventh aspect, a retransmission method is provided, including: A first device generating a first BA frame, where a first value of a block segment quantity field in the first BA frame is used to indicate that all MPDUs included in a first A-MPDU are incorrectly received; and the first device sends the first BA frame to a second device.

In some possible implementations, before a first device generates a first BA frame, the method further includes:

The first device receives a first physical layer protocol data unit PPDU sent by the second device, where the first PPDU includes a physical layer preamble and the first A-MPDU.

In some possible implementations, a value of a block acknowledgment bitmap field in the first BA frame is used to indicate at least one of a reason why all the MPDUs in the first A-MPDU are incorrectly received, a redundancy version for next transmission, and a modulation and coding scheme order for next transmission.

In some possible implementations, the method further includes: The first device generates a second BA frame, where a second value of a block segment quantity field in the second BA frame is used to indicate that all MPDUs included in a second A-MPDU included in a second PPDU are correctly received; and the first device sends the second BA frame to the second device.

According to an eighth aspect, a retransmission method is provided, including: A second device receives a first BA frame sent by a first device, where a first value of a block segment quantity field in the first BA frame is used to indicate that all MPDUs included in a first A-MPDU are incorrectly received; and the second device performs, based on the first BA frame, HARQ retransmission.

In some possible implementations, before a second device receives a BA frame sent by a first device, the method further includes: The second device receives a first PPDU sent by the first device, where the PPDU includes a physical layer preamble and the first A-MPDU.

In some possible implementations, a value of a block acknowledgment bitmap field in the first BA frame is used to indicate at least one of a reason why all the MPDUs included in the first A-MPDU are incorrectly received, a redundancy version for next transmission, and a modulation and coding scheme order for next transmission.

In some possible implementations, the method further includes: The second device receives a second BA frame sent by the first device, where a second value of a block segment quantity field in the second BA frame is used to indicate that all MPDUs included in a second A-MPDU included in a second PPDU are correctly received; and the second device determines not to perform HARQ retransmission based on the second BA frame.

According to a ninth aspect, a retransmission method is provided, including: A first device generates a first BA frame, where a first value of a block acknowledgment frame type field in the first BA frame is used to indicate that all media access control protocol data units MPDUs included in a first A-MPDU are incorrectly received; and the first device sends the first BA frame to a second device.

In some possible implementations, before a first device generates a first BA frame, the method further includes:

The first device receives a first physical layer protocol data unit PPDU sent by the second device, where the first PPDU includes a physical layer preamble and the first A-MPDU.

In some possible implementations, a value of the block acknowledgment information field is used to indicate at least one of a reason why all the MPDUs included in the first A-MPDU are incorrectly received, a redundancy version for next transmission, and a modulation and coding scheme order for next transmission.

In some possible implementations, the method further includes: The first device generates a second BA frame, where a second value of a block acknowledgment frame type field in the second BA frame is used to indicate that all MPDUs included in a second A-MPDU included in a second PPDU are correctly received; and the first device sends the second BA frame to the second device.

According to a tenth aspect, a retransmission method is provided, including: A second device receives a first BA frame sent by a first device, where a first value of a block acknowledgment frame type field in the first BA frame is used to indicate that all media access control protocol data units MPDUs included in a first A-MPDU are incorrectly received; and the second device performs, based on the first BA frame, HARQ retransmission.

In some possible implementations, before a first device generates a first BA frame, the method further includes: The second device sends a first PPDU to the first device, where the first PPDU includes a physical layer preamble and the first A-MPDU.

In some possible implementations, a value of the block acknowledgment information field is used to indicate at least one of a reason why all the MPDUs included in the first A-MPDU are incorrectly received, a redundancy version for next transmission, and a modulation and coding scheme order for next transmission.

In some possible implementations, the method further includes: The second device receives a second BA frame sent by the first device, where a second value of a block acknowledgment frame type field in the second BA frame is used to indicate that all MPDUs included in a second A-MPDU included in a second PPDU are correctly received. The second device determines not to perform HARQ retransmission based on the second BA frame.

According to an eleventh aspect, an embodiment of this application provides a retransmission apparatus. The apparatus includes: a processing unit, configured to generate a block acknowledgment BA frame, where a first value of an acknowledgment type field and a second value of a traffic identifier field in the BA frame are used to jointly indicate that all media access control protocol data units MPDUs included in an aggregated media access control protocol data unit A-MPDU received by the apparatus are incorrectly received; and a transceiver unit, configured to send the BA frame to a second device.

The retransmission apparatus provided in the eleventh aspect is configured to perform the first aspect or any possible implementation of the first aspect. For specific details, refer to the first aspect or any possible implementation of the first aspect. Details are not described herein again.

According to a twelfth aspect, an embodiment of this application provides a retransmission apparatus. The apparatus includes: a transceiver unit, configured to receive a block acknowledgment BA frame sent by a first device, where a first value of an acknowledgment type field and a second value of a traffic identifier field in the BA frame are used to jointly indicate that all media access control protocol data units MPDUs included in an aggregated media access control protocol data unit A-MPDU received by the first device are incorrectly received; and a processing unit, configured to control, based on the BA frame, the transceiver unit to perform hybrid automatic repeat request HARQ retransmission.

The retransmission apparatus provided in the twelfth aspect is configured to perform the second aspect or any possible implementation of the second aspect. For specific details, refer to the second aspect or any possible implementation of the second aspect. Details are not described herein again.

According to a thirteenth aspect, an embodiment of this application provides a retransmission apparatus. The apparatus includes a transceiver unit, configured to receive a PPDU sent by a second device, where a physical layer preamble in the PPDU includes a HARQ field. If the PPDU is a single user SU PPDU, the HARQ field is located between a next-generation signal field NG-SIG-A and a next-generation short training field NG-STF in the physical layer preamble in the PPDU, the HARQ field is located in an NG-SIG-A in the physical layer preamble in the PPDU, or the HARQ field is located between a next-generation long training field NG-LTF in the physical layer preamble in the PPDU and an aggregated media access control protocol data unit A-MPDU included in the PPDU. If the PPDU is a multi-user MU PPDU, the HARQ field is located between the NG-LTF in the physical layer preamble in the PPDU and the A-MPDU in the PPDU, or the HARQ field is located in a user information field in a next-generation signal field NG-SIG-B in the physical layer preamble in the PPDU. If the PPDU is a trigger basic TB PPDU, the HARQ field is located between the NG-LTF in the physical layer preamble in the PPDU and the A-MPDU in the PPDU.

The retransmission apparatus provided in the thirteenth aspect is configured to perform the third aspect or any possible implementation of the third aspect. For specific details, refer to the third aspect or any possible implementation of the third aspect. Details are not described herein again.

According to a fourteenth aspect, an embodiment of this application provides a retransmission apparatus. The apparatus includes a transceiver unit, configured to send a PPDU to a first device, where a physical layer preamble in the PPDU includes a HARQ field. If the PPDU is a single user SU PPDU, the HARQ field is located between a next-generation signal field NG-SIG-A and a next-generation short training field NG-STF in the physical layer preamble in the PPDU, the HARQ field is located in an NG-SIG-A in the physical layer preamble in the PPDU, or the HARQ field is located between a next-generation long training field NG-LTF in the physical layer preamble in the PPDU and an aggregated media access control protocol data unit A-MPDU included in the PPDU. If the PPDU is a multi-user MU PPDU, the HARQ field is located between the NG-LTF in the physical layer preamble in the PPDU and the A-MPDU in the PPDU, or the HARQ field is located in a user information field in a next-generation signal field NG-SIG-B in the physical layer preamble in the first PPDU. If the PPDU is a trigger basic TB PPDU, the HARQ field is located between the NG-LTF in the physical layer preamble in the PPDU and the A-MPDU in the PPDU.

The retransmission apparatus provided in the fourteenth aspect is configured to perform the fourth aspect or any possible implementation of the fourth aspect. For specific details, refer to the fourth aspect or any possible implementation of the fourth aspect. Details are not described herein again.

According to a fifteenth aspect, an embodiment of this application provides a retransmission apparatus. The apparatus includes a transceiver unit, configured to receive a PPDU sent by a second device, where a physical layer preamble in the PPDU includes a HARQ field, and a response manner field in the HARQ field is used to indicate a manner in which the apparatus responds to an A-MPDU.

According to a sixteenth aspect, an embodiment of this application provides a retransmission apparatus. The apparatus includes a transceiver unit, configured to send a PPDU to a first device, where a physical layer preamble in the PPDU includes a HARQ field, and a response manner field in the HARQ field is used to indicate a manner in which the first device responds to an A-MPDU.

According to a seventeenth aspect, an embodiment of this application provides a retransmission apparatus. The apparatus includes: a processing unit, configured to generate a first BA frame, where a first value of a block segment quantity field in the first BA frame is used to indicate that all MPDUs included in a first A-MPDU are incorrectly received; and a transceiver unit, configured to send the first BA frame to a second device.

The retransmission apparatus provided in the seventeenth aspect is configured to perform the seventh aspect or any possible implementation of the seventh aspect. For specific details, refer to the seventh aspect or any possible implementation of the seventh aspect. Details are not described herein again.

According to an eighteenth aspect, an embodiment of this application provides a retransmission apparatus. The apparatus includes: a transceiver unit, configured to receive a first BA frame sent by a first device, where a first value of a block segment quantity field in the first BA frame is used to indicate that all MPDUs included in a first A-MPDU are incorrectly received; and a processing unit, configured to control, based on the first BA frame, the transceiver unit to perform HARQ retransmission.

The retransmission apparatus provided in the eighteenth aspect is configured to perform the eighth aspect or any possible implementation of the eighth aspect. For specific details, refer to the eighth aspect or any possible implementation of the eighth aspect. Details are not described herein again.

According to a nineteenth aspect, an embodiment of this application provides a retransmission apparatus. The apparatus includes: a processing unit, configured to generate a first BA frame, where a first value of a block acknowledgment frame type field in the first BA frame is used to indicate that all media access control protocol data units MPDUs included in a first A-MPDU are incorrectly received; and a transceiver unit, configured to send the first BA frame to a second device.

The retransmission apparatus provided in the nineteenth aspect is configured to perform the ninth aspect or any possible implementation of the ninth aspect. For specific details, refer to the ninth aspect or any possible implementation of the seventh aspect. Details are not described herein again.

According to a twentieth aspect, an embodiment of this application provides a retransmission apparatus. The apparatus includes: a transceiver unit, configured to receive a first BA frame sent by a first device, where a first value of a block acknowledgment frame type field in the first BA frame is used to indicate that all media access control protocol data units MPDUs included in a first A-MPDU are incorrectly received; and a processing unit, configured to control, based on the first BA frame, the transceiver unit to perform HARQ retransmission.

The retransmission apparatus provided in the twentieth aspect is configured to perform the tenth aspect or any possible implementation of the tenth aspect. For specific details, refer to the tenth aspect or any possible implementation of the tenth aspect. Details are not described herein again.

According to a twenty-first aspect, an embodiment of this application provides a retransmission apparatus. The apparatus includes a processor and a transceiver that is internally connected to and communicated with the processor. The processor is configured to generate a block acknowledgment BA frame, where a first value of an acknowledgment type field and a second value of a traffic identifier field in the BA frame are used to jointly indicate that all media access control protocol data units MPDUs included in an aggregated media access control protocol data unit A-MPDU received by the apparatus are incorrectly received. The transceiver is configured to send the BA frame to a second device.

The retransmission apparatus provided in the twenty-first aspect is configured to perform the first aspect or any possible implementation of the first aspect. For specific details, refer to the first aspect or any possible implementation of the first aspect. Details are not described herein again.

According to a twenty-second aspect, an embodiment of this application provides a retransmission apparatus. The apparatus includes a processor and a transceiver that is internally connected to and communicated with the processor. The transceiver is configured to receive a block acknowledgment BA frame sent by a first device, where a first value of an acknowledgment type field and a second value of a traffic identifier field in the BA frame are used to jointly indicate that all media access control protocol data units MPDUs included in an aggregated media access control protocol data unit A-MPDU received by the first device are incorrectly received. The processor is configured to control, based on the BA frame, the transceiver to perform hybrid automatic repeat request HARQ retransmission.

The retransmission apparatus provided in the twenty-second aspect is configured to perform the second aspect or any possible implementation of the second aspect. For specific details, refer to the second aspect or any possible implementation of the second aspect. Details are not described herein again.

According to a twenty-third aspect, an embodiment of this application provides a retransmission apparatus. The apparatus includes a processor and a transceiver that is internally connected to and communicated with the processor. The transceiver is configured to receive a PPDU sent by a second device, where a physical layer preamble in the PPDU includes a HARQ field. If the PPDU is a single user SU PPDU, the HARQ field is located between a next-generation signal field NG-SIG-A and a next-generation short training field NG-STF in the physical layer preamble in the PPDU, the HARQ field is located in the NG-SIG-A in the physical layer preamble in the PPDU, or the HARQ field is located between a next-generation long training field NG-LTF in the physical layer preamble in the PPDU and an aggregated media access control protocol data unit A-MPDU included in the PPDU. If the PPDU is a multi-user MU PPDU, the HARQ field is located between the NG-LTF in the physical layer preamble in the PPDU and the A-MPDU in the PPDU, or the HARQ field is located in a user information field in a next-generation signal field NG-SIG-B in the physical layer preamble in the PPDU. If the PPDU is a trigger basic TB PPDU, the HARQ field is located between the NG-LTF in the physical layer preamble in the PPDU and the A-MPDU in the PPDU. The processor is configured to determine a location of the HARQ field in the PPDU.

The retransmission apparatus provided in the twenty-third aspect is configured to perform the third aspect or any possible implementation of the third aspect. For specific details, refer to the third aspect or any possible implementation of the third aspect. Details are not described herein again.

According to a twenty-fourth aspect, an embodiment of this application provides a retransmission apparatus. The apparatus includes a processor and a transceiver that is internally connected to and communicated with the processor. The transceiver is configured to send a PPDU to a first device, where a physical layer preamble in the PPDU includes a HARQ field. If the PPDU is a single user SU PPDU, the HARQ field is located between a next-generation signal field NG-SIG-A and a next-generation short training field NG-STF of the physical layer preamble in the PPDU, the HARQ field is located in the NG-SIG-A in the physical layer preamble in the PPDU, or the HARQ field is located between a next-generation long training field NG-LTF in the physical layer preamble in the PPDU and an aggregated media access control protocol data unit A-MPDU included in the PPDU. If the PPDU is a multi-user MU PPDU, the HARQ field is located between the NG-LTF in the physical layer preamble in the PPDU and the A-MPDU in the PPDU, or the HARQ field is located in a user information field in a next-generation signal field NG-SIG-B in the physical layer preamble in the first PPDU. If the PPDU is a trigger basic TB PPDU, the HARQ field is located between the NG-LTF in the physical layer preamble in the PPDU and the A-MPDU in the PPDU. The processor is configured to control, based on the HARQ field, the transceiver to perform HARQ retransmission.

The retransmission apparatus provided in the twenty-fourth aspect is configured to perform the fourth aspect or any possible implementation of the fourth aspect. For specific details, refer to the fourth aspect or any possible implementation of the fourth aspect. Details are not described herein again.

According to a twenty-fifth aspect, an embodiment of this application provides a retransmission apparatus. The apparatus includes a processor and a transceiver that is internally connected to and communicated with the processor. The transceiver is configured to receive a PPDU sent by a second device, where a physical layer preamble in the PPDU includes a HARQ field, and a response manner field in the HARQ field is used to indicate a manner in which the apparatus responds to an A-MPDU. The processor is configured to determine, based on the response manner field, a manner of responding to the A-MPDU.

According to a twenty-sixth aspect, an embodiment of this application provides a retransmission apparatus. The apparatus includes a processor and a transceiver that is internally connected to and communicated with the processor. The transceiver is configured to send a PPDU to a first device, where a physical layer preamble in the PPDU includes a HARQ field, and a response manner field in the HARQ field is used to indicate a manner in which a first device responds to the A-MPDU. The processor is configured to control, based on the response manner field, the transceiver to receive a response of the manner in which the first device responds to the A-MPDU.

According to a twenty-seventh aspect, an embodiment of this application provides a retransmission apparatus. The apparatus includes a processor and a transceiver that is internally connected to and communicated with the processor. The processor is configured to generate a first BA frame, where a first value of a block segment quantity field in the first BA frame is used to indicate that all MPDUs included in a first A-MPDU are incorrectly received. The transceiver is configured to send the first BA frame to a second device.

The retransmission apparatus provided in the twenty-seventh aspect is configured to perform the seventh aspect or any possible implementation of the seventh aspect. For specific details, refer to the seventh aspect or any possible implementation of the seventh aspect. Details are not described herein again.

According to a twenty-eighth aspect, an embodiment of this application provides a retransmission apparatus. The apparatus includes a processor and a transceiver that is internally connected to and communicated with the processor. The transceiver is configured to receive a first BA frame sent by a first device, where a first value of a block segment quantity field in the first BA frame is used to indicate that all MPDUs included in a first A-MPDU are incorrectly received. The processor is configured to control, based on the first BA frame, the transceiver to perform HARQ retransmission.

The retransmission apparatus provided in the twenty-eighth aspect is configured to perform the eighth aspect or any possible implementation of the eighth aspect. For specific details, refer to the eighth aspect or any possible implementation of the eighth aspect. Details are not described herein again.

According to a twenty-ninth aspect, an embodiment of this application provides a retransmission apparatus. The apparatus includes a processor and a transceiver that is internally connected to and communicated with the processor. The processor is configured to generate a first BA frame, where a first value of a block acknowledgment frame type field in the first BA frame is used to indicate that all media access control protocol data units MPDUs included in a first A-MPDU are incorrectly received. The transceiver is configured to send the first BA frame to a second device.

The retransmission apparatus provided in the twenty-ninth aspect is configured to perform the ninth aspect or any possible implementation of the ninth aspect. For specific details, refer to the ninth aspect or any possible implementation of the ninth aspect. Details are not described herein again.

According to a thirtieth aspect, an embodiment of this application provides a retransmission apparatus. The apparatus includes a processor and a transceiver that is internally connected to and communicated with the processor. The transceiver is configured to receive a first BA frame sent by a first device, where a first value of a block acknowledgment frame type field in the first BA frame is used to indicate that all media access control protocol data units MPDUs included in a first A-MPDU are incorrectly received. The processor is configured to control, based on the first BA frame, the transceiver to perform HARQ retransmission.

The retransmission apparatus provided in the thirtieth aspect is configured to perform the tenth aspect or any possible implementation of the tenth aspect. For specific details, refer to the tenth aspect or any possible implementation of the tenth aspect. Details are not described herein again.

According to a thirty-first aspect, an embodiment of this application provides a retransmission apparatus. The apparatus includes a processing circuit and a communications interface that is internally connected to and communicated with the processing circuit. The processing circuit is configured to generate a block acknowledgment BA frame, where a first value of an acknowledgment type field and a second value of a traffic identifier field in the BA frame are used to jointly indicate that all media access control protocol data units MPDUs included in an aggregated media access control protocol data unit A-MPDU received by the apparatus are incorrectly received. The communications interface sends the BA frame to a second device.

The retransmission apparatus provided in the thirty-first aspect is configured to perform the first aspect or any possible implementation of the first aspect. For specific details, refer to the first aspect or any possible implementation of the first aspect. Details are not described herein again.

According to a thirty-second aspect, an embodiment of this application provides a retransmission apparatus. The apparatus includes a processing circuit and a communications interface that is internally connected to and communicated with the processing circuit. The communications interface is configured to receive a block acknowledgment BA frame sent by a first device, where a first value of an acknowledgment type field and a second value of a traffic identifier field in the BA frame are used to jointly indicate that all media access control protocol data units MPDUs included in an aggregated media access control protocol data unit A-MPDU received by the first device are incorrectly received. The processing circuit is configured to control, based on the BA frame, the communications interface to perform hybrid automatic repeat request HARQ retransmission.

The retransmission apparatus provided in the thirty-second aspect is configured to perform the second aspect or any possible implementation of the second aspect. For specific details, refer to the second aspect or any possible implementation of the second aspect. Details are not described herein again.

According to a thirty-third aspect, an embodiment of this application provides a retransmission apparatus. The apparatus includes a processing circuit and a communications interface that is internally connected to and communicated with the processing circuit. The communications interface is configured to receive a PPDU sent by a second device, where a physical layer preamble in the PPDU includes a HARQ field. If the PPDU is a single user SU PPDU, the HARQ field is located between a next-generation signal field NG-SIG-A and a next-generation short training field NG-STF in the physical layer preamble in the PPDU, the HARQ field is located in the NG-SIG-A in the physical layer preamble n the PPDU, or the HARQ field is located between a next-generation long training field NG-LTF in the physical layer preamble in the PPDU and an aggregated media access control protocol data unit A-MPDU included in the PPDU. If the PPDU is a multi-user MU PPDU, the HARQ field is located between the NG-LTF in the physical layer preamble in the PPDU and the A-MPDU in the PPDU, or the HARQ field is located in a user information field in a next-generation signal field NG-SIG-B in the physical layer preamble in the PPDU. If the PPDU is a trigger basic TB PPDU, the HARQ field is located between the NG-LTF in the physical layer preamble in the PPDU and the A-MPDU in the PPDU. The processing circuit is configured to determine a location of the HARQ field in the PPDU.

The retransmission apparatus provided in the thirty-third aspect is configured to perform the third aspect or any possible implementation of the third aspect. For specific details, refer to the third aspect or any possible implementation of the third aspect. Details are not described herein again.

According to a thirty-fourth aspect, an embodiment of this application provides a retransmission apparatus. The apparatus includes a processing circuit and a communications interface that is internally connected to and communicated with the processing circuit. The communications interface is configured to send a PPDU to a first device, where a physical layer preamble in the PPDU includes a HARQ field. If the PPDU is a single user SU PPDU, the HARQ field is located between a next-generation signal field NG-SIG-A and a next-generation short training field NG-STF in the physical layer preamble in the PPDU, the HARQ field is located in the NG-SIG-A in the physical layer preamble in the PPDU, or the HARQ field is located between a next-generation long training field NG-LTF in the physical layer preamble in the PPDU and an aggregated media access control protocol data unit A-MPDU included in the PPDU. If the PPDU is a multi-user MU PPDU, the HARQ field is located between the NG-LTF in the physical layer preamble in the PPDU and the A-MPDU in the PPDU, or the HARQ field is located in a user information field in a next-generation signal field NG-SIG-B in the physical layer preamble in the first PPDU. If the PPDU is a trigger basic TB PPDU, the HARQ field is located between the NG-LTF in the physical layer preamble in the PPDU and the A-MPDU in the PPDU. The processing circuit is configured to control, based on the HARQ field, the communications interface to perform HARQ retransmission.

The retransmission apparatus provided in the thirty-fourth aspect is configured to perform the fourth aspect or any possible implementation of the fourth aspect. For specific details, refer to the fourth aspect or any possible implementation of the fourth aspect. Details are not described herein again.

According to a thirty-fifth aspect, an embodiment of this application provides a retransmission apparatus. The apparatus includes a processing circuit and a communications interface that is internally connected to and communicated with the processing circuit. The communications interface is configured to receive a PPDU sent by a second device, where a physical layer preamble in the PPDU includes a HARQ field. A response manner field in the HARQ field is used to indicate a manner in which the apparatus responds to an A-MPDU. The processing circuit is configured to determine, based on the response manner field, a manner of responding to the A-MPDU.

The retransmission apparatus provided in the thirty-fifth aspect is configured to perform the fifth aspect or any possible implementation of the fifth aspect. For specific details, refer to the fifth aspect or any possible implementation of the fifth aspect. Details are not described herein again.

According to a thirty-sixth aspect, an embodiment of this application provides a retransmission apparatus. The apparatus includes a processing circuit and a communications interface that is internally connected to and communicated with the processing circuit. The communications interface is configured to send a PPDU to a first device, where a physical layer preamble in the PPDU includes a HARQ field. A response manner field in the HARQ field is used to indicate a manner in which the first device responds to an A-MPDU. The processing circuit is configured to control, based on the response manner field, the communications interface to receive a response of the manner in which the first device responds to the A-MPDU.

The retransmission apparatus provided in the thirty-sixth aspect is configured to perform the sixth aspect or any possible implementation of the sixth aspect. For specific details, refer to the sixth aspect or any possible implementation of the second aspect. Details are not described herein again.

According to a thirty-seventh aspect, an embodiment of this application provides a retransmission apparatus. The apparatus includes a processing circuit and a communications interface that is internally connected to and communicated with the processing circuit. The processing circuit is configured to generate a first BA frame, where a first value of a block segment quantity field in the first BA frame is used to indicate that all MPDUs included in a first A-MPDU are incorrectly received. The communications interface is configured to send the first BA frame to a second device.

The retransmission apparatus provided in the thirty-seventh aspect is configured to perform the seventh aspect or any possible implementation of the seventh aspect. For specific details, refer to the seventh aspect or any possible implementation of the seventh aspect. Details are not described herein again.

According to a thirty-eighth aspect, an embodiment of this application provides a retransmission apparatus. The apparatus includes a processing circuit and a communications interface that is internally connected to and communicated with the processing circuit. The communications interface is configured to receive a first BA frame sent by a first device, where a first value of a block segment quantity field in the first BA frame is used to indicate that all MPDUs included in a first A-MPDU are incorrectly received. The processing circuit is configured to control, based on the first BA frame, the communications interface to perform HARQ retransmission.

The retransmission apparatus provided in the thirty-eighth aspect is configured to perform the eighth aspect or any possible implementation of the eighth aspect. For specific details, refer to the eighth aspect or any possible implementation of the eighth aspect. Details are not described herein again.

According to a thirty-ninth aspect, an embodiment of this application provides a retransmission apparatus. The apparatus includes a processing circuit and a communications interface that is internally connected to and communicated with the processing circuit. The processing circuit is configured to generate a first BA frame, where a first value of a block acknowledgment frame type field in the first BA frame is used to indicate that all media access control protocol data units MPDUs included in a first A-MPDU are incorrectly received. The communications interface is configured to send the first BA frame to a second device.

The retransmission apparatus provided in the thirty-ninth aspect is configured to perform the ninth aspect or any possible implementation of the ninth aspect. For specific details, refer to the ninth aspect or any possible implementation of the ninth aspect. Details are not described herein again.

According to a fortieth aspect, an embodiment of this application provides a retransmission apparatus. The apparatus includes a processing circuit and a communications interface that is internally connected to and communicated with the processing circuit. The communications interface is configured to receive a first BA frame sent by a first device, where a first value of a block acknowledgment frame type field in the first BA frame is used to indicate that all media access control protocol data units MPDUs included in a first A-MPDU are incorrectly received. The processing circuit is configured to control, based on the first BA frame, the communications interface to perform HARQ retransmission.

The retransmission apparatus provided in the fortieth aspect is configured to perform the tenth aspect or any possible implementation of the tenth aspect. For specific details, refer to the tenth aspect or any possible implementation of the tenth aspect. Details are not described herein again.

According to a forty-first aspect, an embodiment of this application provides a computer-readable storage medium, configured to store a computer program, where the computer program includes instructions used to perform any one of the first aspect or the possible implementations of the first aspect.

According to a forty-second aspect, an embodiment of this application provides a computer-readable storage medium, configured to store a computer program, where the computer program includes instructions used to perform any one of the second aspect or the possible implementations of the second aspect.

According to a forty-third aspect, an embodiment of this application provides a computer-readable storage medium, configured to store a computer program, where the computer program includes instructions used to perform any one of the third aspect or the possible implementations of the third aspect.

According to a forty-fourth aspect, an embodiment of this application provides a computer-readable storage medium, configured to store a computer program, where the computer program includes instructions used to perform any one of the fourth aspect or the possible implementations of the fourth aspect.

According to a forty-fifth aspect, an embodiment of this application provides a computer-readable storage medium, configured to store a computer program, where the computer program includes instructions used to perform any one of the fifth aspect or the possible implementations of the fifth aspect.

According to a forty-sixth aspect, an embodiment of this application provides a computer-readable storage medium, configured to store a computer program, where the computer program includes instructions used to perform any one of the sixth aspect or the possible implementations of the sixth aspect.

According to a forty-seventh aspect, an embodiment of this application provides a computer-readable storage medium, configured to store a computer program, where the computer program includes instructions used to perform any one of the seventh aspect or the possible implementations of the seventh aspect.

According to a forty-eighth aspect, an embodiment of this application provides a computer-readable storage medium, configured to store a computer program, where the computer program includes instructions used to perform any one of the eighth aspect or the possible implementations of the eighth aspect.

According to a forty-ninth aspect, an embodiment of this application provides a computer-readable storage medium, configured to store a computer program, where the computer program includes instructions used to perform any one of the ninth aspect or the possible implementations of the ninth aspect.

According to a fiftieth aspect, an embodiment of this application provides a computer-readable storage medium, configured to store a computer program, where the computer program includes instructions used to perform any one of the tenth aspect or the possible implementations of the tenth aspect.

According to a fifty-first aspect, an embodiment of this application provides a computer program, where the computer program includes instructions used to perform any one of the first aspect or the possible implementations of the first aspect.

According to a fifty-second aspect, an embodiment of this application provides a computer program, where the computer program includes instructions used to perform any one of the second aspect or the possible implementations of the second aspect.

According to a fifty-third aspect, an embodiment of this application provides a computer program, where the computer program includes instructions used to perform any one of the third aspect or the possible implementations of the third aspect.

According to a fifty-fourth aspect, an embodiment of this application provides a computer program, where the computer program includes instructions used to perform any one of the fourth aspect or the possible implementations of the fourth aspect.

According to a fifty-fifth aspect, an embodiment of this application provides a computer program, where the computer program includes instructions used to perform any one of the fifth aspect or the possible implementations of the fifth aspect.

According to a fifty-sixth aspect, an embodiment of this application provides a computer program, where the computer program includes instructions used to perform any one of the sixth aspect or the possible implementations of the sixth aspect.

According to a fifty-seventh aspect, an embodiment of this application provides a computer program, where the computer program includes instructions used to perform any one of the seventh aspect or the possible implementations of the seventh aspect.

According to a fifty-eighth aspect, an embodiment of this application provides a computer program, where the computer program includes instructions used to perform any one of the eighth aspect or the possible implementations of the eighth aspect.

According to a fifty-ninth aspect, an embodiment of this application provides a computer program, where the computer program includes instructions used to perform any one of the ninth aspect or the possible implementations of the ninth aspect.

According to a sixtieth aspect, an embodiment of this application provides a computer program, where the computer program includes instructions used to perform any one of the tenth aspect or the possible implementations of the tenth aspect.

According to a sixty-first aspect, this application provides a retransmission system. The system includes the apparatus provided in the eleventh aspect and the apparatus provided in the twelfth aspect;
the system includes the apparatus provided in the thirteenth aspect and the apparatus provided in the fourteenth aspect;
the system includes the apparatus provided in the fifteenth aspect and the apparatus provided in the sixteenth aspect;
the system includes the apparatus provided in the seventeenth aspect and the apparatus provided in the eighteenth aspect;
the system includes the apparatus provided in the nineteenth aspect and the apparatus provided in the twentieth aspect;
the system includes the apparatus provided in the twenty-first aspect and the apparatus provided in the twenty-second aspect;
the system includes the apparatus provided in the twenty-third aspect and the apparatus provided in the twenty-fourth aspect;
the system includes the apparatus provided in the twenty-fifth aspect and the apparatus provided in the twenty-sixth aspect;
the system includes the apparatus provided in the twenty-seventh aspect and the apparatus provided in the twenty-eighth aspect;
the system includes the apparatus provided in the twenty-ninth aspect and the apparatus provided in the thirtieth aspect;
the system includes the apparatus provided in the thirty-first aspect and the apparatus provided in the thirty-second aspect;
the system includes the apparatus provided in the thirty-third aspect and the apparatus provided in the thirty-fourth aspect;
the system includes the apparatus provided in the thirty-fifth aspect and the apparatus provided in the thirty-sixth aspect;
the system includes the apparatus provided in the thirty-seventh aspect and the apparatus provided in the thirty-eighth aspect; or
the system includes the apparatus provided in the thirty-ninth aspect and the apparatus provided in the fortieth aspect;

### BRIEF DESCRIPTION OF DRAWINGS

FIG. 1 is a schematic diagram of an application scenario according to an embodiment of this application;
FIG. 2 is a schematic diagram of a format of an A-MPDU according to an embodiment of this application;
FIG. 3 is a schematic diagram of a frame structure of an SU PPDU according to an embodiment of this application;
FIG. 4 is a schematic diagram of a frame structure of an MU PPDU according to an embodiment of this application;
FIG. 5 is a schematic diagram of a frame structure of a TB PPDU according to an embodiment of this application;
FIG. 6 is a schematic diagram of a format of a BA frame according to an embodiment of this application;
FIG. 7 is a schematic diagram of a format of a multi-STA BA frame according to an embodiment of this application;
FIG. 8 is a schematic diagram of a format of another BA frame according to an embodiment of this application;
FIG. 9 is a schematic diagram of a retransmission method according to an embodiment of this application;
FIG. 10 is a schematic diagram of a frame structure of another SU PPDU according to an embodiment of this application;
FIG. 11 is a schematic diagram of a frame structure of still another SU PPDU according to an embodiment of this application;
FIG. 12 is a schematic diagram of a frame structure of yet another SU PPDU according to an embodiment of this application;
FIG. 13 is a schematic diagram of a frame structure of another MU PPDU according to an embodiment of this application;
FIG. 14 is a schematic diagram of a frame structure of still another MU PPDU according to an embodiment of this application;
FIG. 15 is a schematic diagram of a frame structure of another TB PPDU according to an embodiment of this application;
FIG. 16 is a schematic diagram of a format of another BA frame according to an embodiment of this application;
FIG. 17 is a schematic diagram of another retransmission method according to an embodiment of this application;
FIG. 18 is a schematic diagram of a format of still another BA frame according to an embodiment of this application;
FIG. 19 is a schematic diagram of still another retransmission method according to an embodiment of this application;
FIG. 20 is a schematic diagram of a format of yet another BA frame according to an embodiment of this application;
FIG. 21 is a schematic block diagram of a retransmission apparatus according to an embodiment of this application; and
FIG. 22 is a schematic block diagram of another retransmission apparatus according to an embodiment of this application.

### DESCRIPTION OF EMBODIMENTS

The following describes the technical solutions of this application with reference to the accompanying drawings.

The technical solutions in the embodiments of this application may be applied to various communications systems, for example, a wireless local area network (wireless local area network, WLAN) system. Optionally, the embodiments of this application may be further applied to another system, for example, a long term evolution (long term evolution, LTE) system, an LTE frequency division duplex (frequency division duplex, FDD) system, an LTE time division duplex (time division duplex, TDD) system, a universal mobile telecommunications system (universal mobile telecommunications system, UMTS), a worldwide interoperability for microwave access (worldwide interoperability for microwave access, WiMAX) communications system, a future 5th generation (5th generation, 5G) system, or a new radio (new radio, NR) system.

The technical solutions in the embodiments of this application may be further applied to a WLAN. In addition, the embodiments of this application may be applied to any protocol in the 802.11 series protocols of the international institute of electrical and electronics engineers (institute of electrical and electronics engineers, IEEE) currently used by the WLAN or any protocol in 802.11 series protocols of the IEEE in the future.

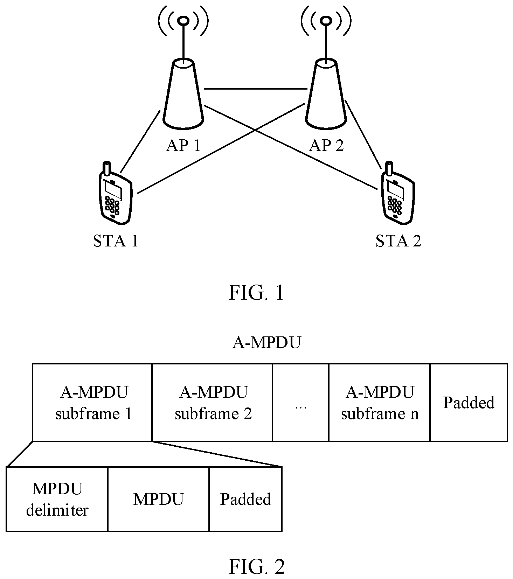

FIG. 1 shows a schematic diagram of an application scenario according to an embodiment of this application. A scenario system shown in FIG. 1 may be a WLAN system, and the WLAN system in FIG. 1 may include one or more APs and one or more STAs. An example in which there are two APs (an AP 1 and an AP 2) and two user stations (station, STA) (a STA 1 and a STA 2) in FIG. 1 is used. Wireless communication may be performed between the APs, between the APs and the STAs, and between the STAs by using various standards.

A user station (STA) may also be referred to as a system, a subscriber unit, an access terminal, a mobile station, a remote station, a remote terminal, a mobile device, a user terminal, a terminal, a wireless communication device, a user agent, a user apparatus, or user equipment (user equipment, UE). The station may be a wireless communication chip, a wireless sensor, or a wireless communication terminal. For example, the station is a mobile phone supporting a wireless fidelity (wireless fidelity, Wi-Fi) communication function, a tablet computer supporting a Wi-Fi communication function, a set-top box supporting a Wi-Fi communication function, a smart television supporting a Wi-Fi communication function, a smart wearable device supporting a Wi-Fi communication function, a vehicle-mounted communication device supporting a Wi-Fi communication function, or a computer supporting a Wi-Fi communication function. Optionally, the station may support a device that complies with different versions of the 802.11 protocol in a current network system or a future network system.

In this embodiment of this application, the AP communicates with the STA by using a wireless local area network, and transmits data of the STA to a network side, or transmits data from a network side to the STA. The AP is also referred to as a wireless access point, a hotspot, or the like. The AP is an access point used by a mobile user to access a wired network, and is mainly deployed at home, inside a building or inside a campus, and has a typical coverage radius of tens of meters to hundreds of meters. Certainly, the AP may alternatively be deployed outdoors. The AP is equivalent to a bridge that connects the wired network and a wireless network. A main function of the AP is to connect wireless network clients together, and then connect the wireless network to the Ethernet. Specifically, the AP may be a terminal device or a network device with a Wi-Fi chip. Optionally, the AP may be the device that complies with the different versions of the 802.11 protocol in the current network system or the future network system.

Specifically, wireless communication between the AP and the STA may be performed by using a single-user multiple-input multiple-output (single-user multiple-input multiple-output, SU-MIMO) technology or a multi-user multiple-input multiple-output (multi-users multiple-input multiple-output, MU-MIMO) technology. In this embodiment of this application, each STA is equipped with one or more antennas. Each AP supports multi-site coordinated and/or joint transmission.

It should be understood that communication in this specification may be direct communication, or may be indirect communication. This is not limited in this embodiment of this application.

In addition, aspects or features of this application may be implemented as a method, an apparatus, or a product that uses standard programming and/or engineering technologies. The term "product" used in this application covers a computer program that can be accessed from any computer-readable component, carrier, or medium. For example, the computer-readable medium may include but is not limited to: a magnetic storage component (for example, a hard disk, a floppy disk or a magnetic tape), an optical disc (for example, a compact disc (compact disc, CD), and a digital versatile disc (digital versatile disc, DVD)), a smart card and a flash memory component (for example, an erasable programmable read-only memory (erasable programmable read-only memory, EPROM), a card, a stick, or a key drive). In addition, various storage media described in this specification may indicate one or more devices and/or other machine-readable media that are configured to store information. The term "machine-readable media" may include but is not limited to a radio channel, and various other media that can store, contain, and/or carry an instruction and/or data.

The following describes terms used in the embodiments of this application.

A-MPDU: To improve transmission efficiency of a media access control (media access control, MAC) frame, the MAC frame is introduced into the 802.1 In standard, and the MAC frame is also referred to as an aggregation frame of an MPDU. The A-MPDU aggregates a plurality of MPDUs and sends the MPDUs through one physical layer preamble. This effectively reduces overheads caused by channel contention and the physical layer preamble. A format of the A-MPDU is shown in FIG. 2. The plurality of MPDUs are separated by a delimiter (Delimiter) and connected together.

Particularly, an A-MPDU that includes only one delimiter and an MPDU is referred to as a single media access control protocol data unit (Single MPDU, S-MPDU). The 802.11 standard uses a simple acknowledgment frame to reply to the MPDU and the S-MPDU. Whether to send an acknowledgment frame indicates whether the MPDU or the S-MPDU is successfully received. The A-MPDU is replied with a block acknowledgment (block acknowledgment, BA) frame. The BA frame includes a block acknowledgment bitmap field, and a bit value padded in the block acknowledgment bitmap field may be used to indicate which MPDUs in the A-MPDUs are correctly received (for example, the value for indication is 1) and which MPDUs are not correctly received (for example, the value for indication is 0). If any MPDU in the A-MPDU is not correctly received, a STA may not feed back any information either.

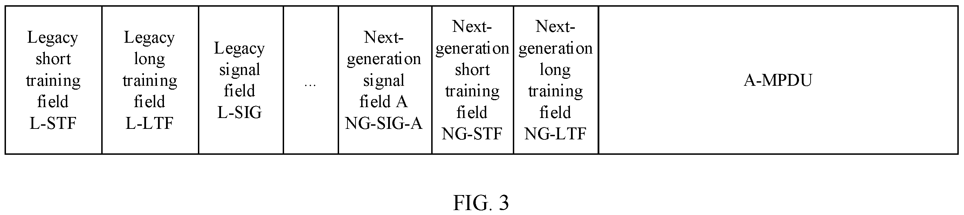

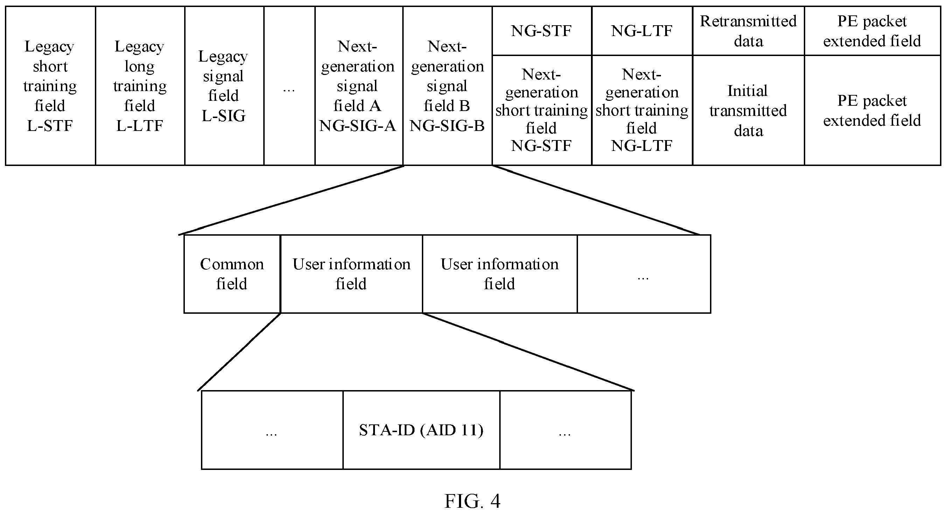

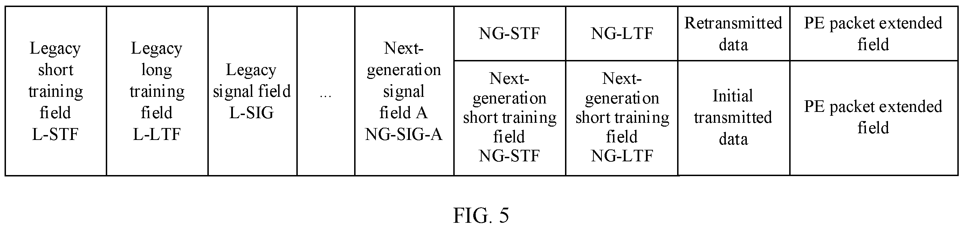

Physical layer protocol data unit (physical layer protocol data unit, PPDU): A data packet in the A-MPDU is referred to as a PPDU, and the PPDU is a physical frame structure including the A-MPDU. Different types of PPDUs have different formats. FIG. 3 is a schematic diagram of a frame structure of a single user PPDU (single user PPDU, SU PPDU). FIG. 4 is a schematic diagram of a frame structure of a multi user PPDU (multi user PPDU, MU PPDU). A user information field (user information filed) in FIG. 4 includes a station identifier (station identifier, STA-ID) field, and the station identifier field is used to identify an address of a station. Generally, lowest 11 bits of an association identifier (association identifier, AID) are selected. FIG. 5 is a schematic diagram of a frame structure of a trigger basic PPDU (trigger basic, TB PPDU). In FIG. 3 to FIG. 5, an L-STF represents a legacy-short training field (legacy-short training field), an L-LTF represents a legacy-long training field (legacy-long training field), an L-SIG represents a legacy-signal field (legacy-signal), an NG-SIG-A represents a next generation-signal field (next generation-signal-A), an NG-SIG-B represents a next generation-signal field B (next generation-signal-B), an NG-STF represents a next generation-short training field (next generation-short training field), an NG-LTF represents a next generation-long training field (next generation-long training field), and PE represents packet extension (packet extension).

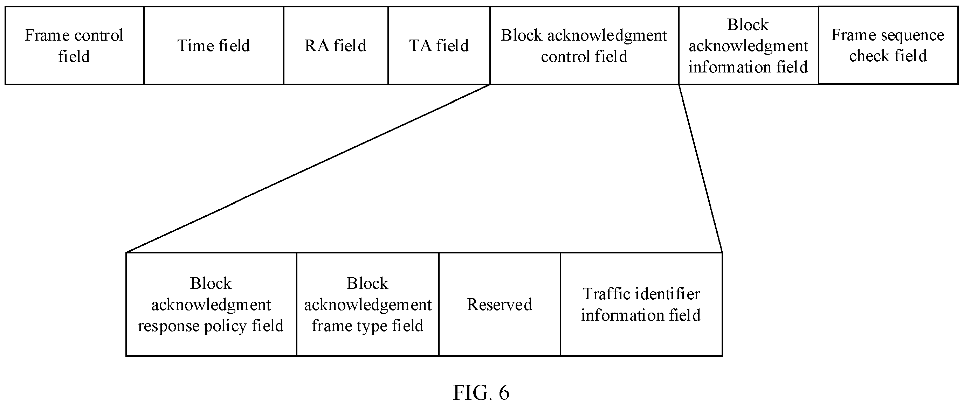

Block acknowledgment frame: The BA frame is used to respond to a physical layer protocol data unit (physical protocol data unit, PPDU). In other words, the BA frame is an acknowledgment for a PPDU sent by a second device, and formats of the BA frame vary in different transmission modes. As shown in FIG. 6, the BA frame includes a frame control (frame control) field, a duration (duration) field, a receiving address (receiving address, RA) field, a transmitting address (transmitting address, TA) field, a block acknowledgment control (BA control) field, a block acknowledgment information (BA information) field, and a frame check sequence (frame check sequence, FCS) field. As shown in Table 1, different bit values of a block acknowledgment frame type (BA frame type) field in the block acknowledgment control field in FIG. 6 indicate different BA frames.

**Table 1**

| Bit value of a BA type | Type of a BA frame | Bit value of a BA type | Type of a BA frame |
|---|---|---|---|
| 0 | Basic BA frame | 6 | Groupcast with retries (groupcast with retries, GCR) BA frame |
| 1 | Extended compressed BA frame | 7-9 | Reserved (reserved) |
| 2 | Compressed BA frame | 10 | Multi-STA (multi-STA) BA frame |
| 3 | Multi-traffic identifier BA frame | 11 | General link GCR (general link GCR, GLK-GCR) BA frame |
| 4-5 | Reserved (reserved) | 12-15 | Reserved (reserved) |

### Multi-STA BA frame:

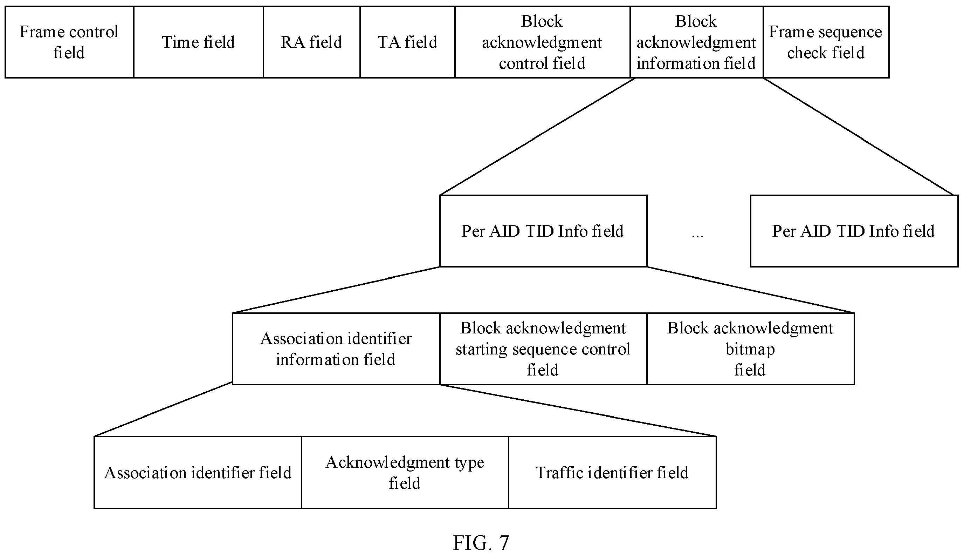

In Table 1, that a bit value of the BA type field is 10 indicates the multi-STA BA frame. Specifically, a format of the multi-STA BA frame is shown in FIG. 7. A block acknowledgment information field in the multi-STA BA frame includes a per association identifier traffic identifier information field (per AID TID Info). There may be one or more per association identifier traffic identifier information fields, and one STA corresponds to one per association identifier traffic identifier information field. The per association identifier traffic identifier information field includes an association identifier information (AID TID Info) field, a block acknowledgment starting sequence control (BA starting sequence control) field, and a block acknowledgment bitmap (BA bitmap) field. The association identifier information field includes an association identifier (association identifier, AID) field, an acknowledgment type (ack type), and a traffic identifier (traffic identifier, TID) field. An ack type subfield and a TID subfield are jointly used to indicate a meaning of the per association identifier traffic identifier information field. As shown in Table 2, that ack type = 0, and TID = 0-7 indicates that the association identifier information field carries content of a block acknowledgment (BA). That ack type = 1, and TID = 0-7 indicates that the association identifier information field carries content of an acknowledgment (acknowledgment). That ack type = 1, and TID = 14 indicates that a subfield in the association identifier information field carries content of an all acknowledgement (all acknowledgment). That ack type = 1, and TID = 15 indicates that the subfield in the association identification information field carries content of a management frame (management frame) or a power saving-poll (power saving-poll, PS-Poll) acknowledgment. When the block acknowledgment (BA) is replied, a bit value padded in a block acknowledgment starting sequence control field is used to indicate a sequence number of a starting physical layer service data unit (media access control service data unit, MSDU) or an aggregate MSDU (aggregated MSDU, A-MSDU). Each bit value in the block acknowledgment bitmap field indicates receiving statuses of a series of MSDUs or A-MSDUs starting from the starting MSDU or A-MSDU. When the acknowledgment (acknowledgment) is replied, the block acknowledgment starting sequence control field and the block acknowledgment bitmap field do not appear, indicating that a single quality of service (quality of service, QoS) data frame is correctly received. When the all acknowledgment (all acknowledgment) is replied, the block acknowledgment starting sequence control field and the block acknowledgment bitmap field do not appear, indicating that all MPDUs in an A-MPDU or multi-TID A-MPDU that triggers the acknowledgment are correctly received. When the management frame/PS-Poll acknowledgment is replied, the block acknowledgment starting sequence control field and the block acknowledgment bitmap field do not appear, indicating that a management frame carried in the A-MPDU or an S-MPDU is correctly received, or a PS-Poll frame carried in an S-MPDU is correctly received.

**Table 2**

| Ack type | TID | Whether a block acknowledgmentstarting sequence control field and a block acknowledgment bitmap field appear | Content of per association identifier traffic identifier information field in a multi-STA BA frame |
|---|---|---|---|
| 0 | 0-7 | Appear | Content of a BA |
| 1 | 0-7 | Not appear | Content of an acknowledgement |
| 0 or 1 | 8-12 | N/A (this field is not involved) | Reserved |
| 0 | 13 | N/A | Reserved |
| 0 | 14 | N/A | Reserved |
| 1 | 14 | Not appear | Content of an all acknowledgement |
| 0 | 15 | N/A | Reserved |
| 1 | 15 | Not appear | Content of a management frame or a PS-Poll acknowledgment |

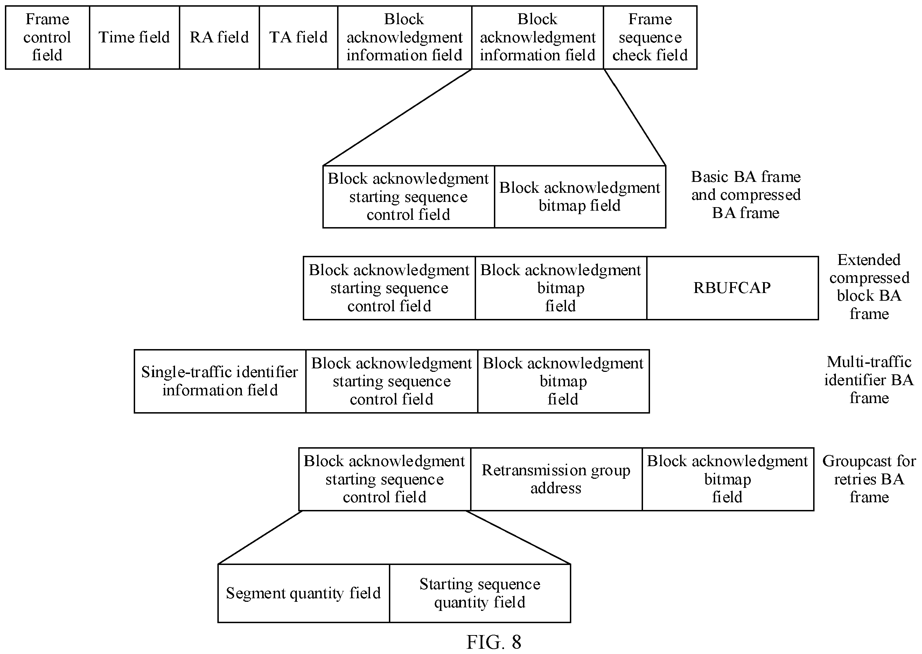

As shown in Table 1, that the bit value of the BA type field is 0 indicates the basic (basic) BA frame. That the bit value of the BA type field is 2 indicates the compressed (compressed) BA frame. That the bit value of the BA type field is 1 indicates the extended compressed (extended compressed) BA frame. That the bit value of the BA type field is 3 indicates the multi-traffic identifier (TID) BA frame. That the bit value of the BA type field is 6 indicates the groupcast with retries BA frame. As shown in FIG. 8, the basic BA frame, the compressed BA frame, the extended compressed block BA frame, the multi-traffic identifier BA frame, and groupcast with retries BA frame all include a block acknowledgment starting sequence control field, and the block acknowledgment starting sequence control field includes a segment quantity field and a starting sequence quantity field. A segment quantity is usually set to 0.

When no HARQ retransmission is performed, a receiving address and a transmitting address are carried in each MPDU in the A-MPDU. When all the MPDUs in the A-MPDU are incorrectly received, a receive end cannot determine whether the PPDU is sent to the receive end. Therefore, the receive end cannot reply with the BA frame. Even if the receive end can determine that the PPDU is sent to the receive end, the receive end needs to separately indicate, by using a plurality of bits in the block acknowledgment bitmap (BA bitmap) field, that all the MPDUs in the A-MPDU are incorrectly received. This causes relatively large signaling overheads.

Therefore, in this embodiment of this application, a first value of an acknowledgment type field and a second value of a traffic identifier field in the BA frame may be used to jointly indicate that all the MPDUs included in the A-MPDU are incorrectly received, so that retransmission is performed based on the BA frame. This avoids signaling overheads caused by the block acknowledgement bitmap field required to indicate that all the MPDUs included in the A-MPDU are incorrectly received.

An example in which a transmit end is the second device and a receive end is a first device is used for description below. The first device may be an AP, and the second device may be a STA. Alternatively, the first device may be a STA, and the second device may be an AP. Alternatively, the first device may be a STA, and the second device may be a STA. Alternatively, the first device may be an AP, and the second device may be an AP. This embodiment of this application imposes no limitation on specific devices of the first device and the second device.

The following describes a retransmission method provided in an embodiment of this application with reference to the accompanying drawings.

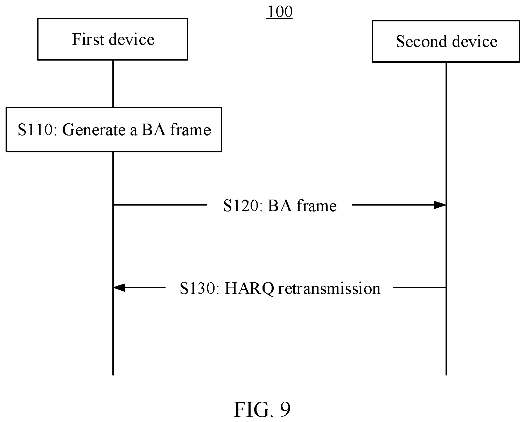

FIG. 9 shows a retransmission method 100 according to an embodiment of this application, and the method 100 includes the following steps.

S110: A first device generates a block acknowledgment BA frame, where a first value of an acknowledgment type field and a second value of a traffic identifier field in the BA frame are used to jointly indicate that all MPDUs included in an A-MPDU are incorrectly received.

Optionally, the acknowledgment type field and the traffic identifier field may be the acknowledgment type field and the traffic identifier field in the association identifier information field in the block acknowledgment information field in FIG. 7. For example, in Table 3, the first value may be 1, and the second value may be 13. For another example, the first value is 0, the second value is 14. The first value and the second value may alternatively be other values. This is not limited in this embodiment of this application.

The BA frame in the method 100 may be a multi-STA BA frame.

**Table 3**

| Ack type | TID | Whether a block starting sequence control field and a block acknowledgment bit field appear | Content of per association identifier traffic identifier information field in a multi-STA BA frame |
|---|---|---|---|
| 1 | 13 | Not appear | Content of an acknowledgement: Responding that all MPDUs included in an A-MPDU are incorrectly received |

It should be noted that, that all the MPDUs included in the A-MPDU are incorrectly received may be understood as that any MPDU in the MPDUs included in the A-MPDU is not correctly received. It may be that all the MPDUs sent by a second device are lost, and therefore all the MPDUs are incorrectly received; or some of the MPDUs sent by the second device are lost and a remaining part of the MPDUs are decoded incorrectly, and therefore all the MPDUs are incorrectly received; or some of the MPDUs sent by the second device are decoded incorrectly, and therefore all the MPDUs are incorrectly received.

Before S110, the method further includes: The second device sends a PPDU to the first device, and the first device receives the PPDU sent by the second device, where the PPDU includes a physical layer preamble and the A-MPDU.

The BA frame is used to respond that all the MPDUs included in the A-MPDU are incorrectly received.

S120: The first device sends the BAframe to the second device, and the second device receives the BA frame sent by the first device.

S130: The second device performs HARQ retransmission based on the BAframe.

In an SU PPDU and an MU PPDU, before the method 100, the first device needs to determine that the PPDU is sent by the second device to the first device, only then the first device sends the BA frame to the second device. The PPDU may include a first HARQ field, and the first HARQ field is used to indicate whether the PPDU is sent by the second device to the first device. In this way, the first device determines, by using the first HARQ field, whether the PPDU is sent by the second device to the first device. Further, the first device determines, by using an address field in the first HARQ field, whether the PPDU is sent by the second device to the first device. The following describes a case of the SU PPDU and a case of the MU PPDU.

In the SU PPDU, there are at least three optional manners of a location of the first HARQ field in the PPDU.

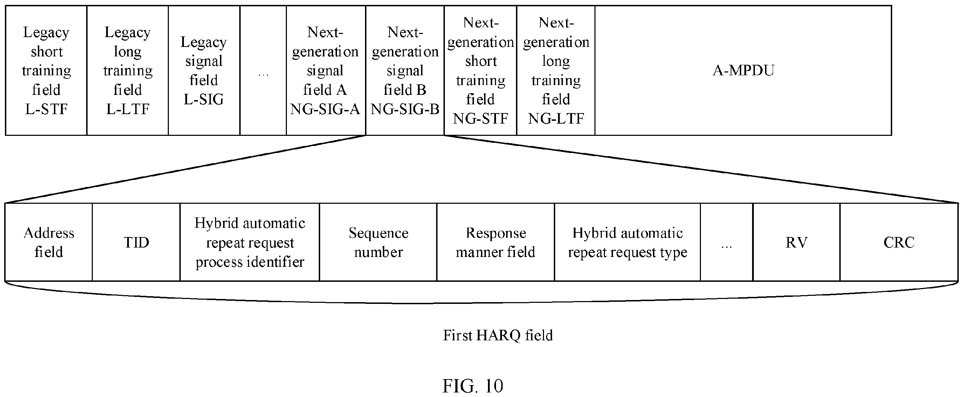

Manner 1: An NG-SIG-B in which the first HARQ field is located is located between an NG-SIG-A and an NG-STF in the physical layer preamble in the PPDU, which is as shown in FIG. 10. In this way, two separate cyclic redundancy code (cyclic redundancy code, CRC) checks are performed on the NG-SIG-A and the NG-SIG-B. The NG-SIG-B appears in the PPDU only when HARQ transmission needs to be performed by using the first HARQ field. When HARQ transmission does not need to be performed, the NG-SIG-B does not appear in the PPDU. This can reduce signaling overheads. Specifically, the second device may indicate, by using a specific bit in the NG-SIG-A, whether the NG-SIG-B appears in the PPDU, or may indicate, in another manner, whether the NG-SIG-B appears in the PPDU. In this way, the first device may determine, based on the specific bit in the NG-SIG-A or another indication manner, whether the NG-SIG-B exists in the PPDU. In addition, when the NG-SIG-B is located between the NG-SIG-A and the NG-STF, the first device may learn of the first HARQ field earlier, and prepare in advance to receive HARQ retransmission from the second device.

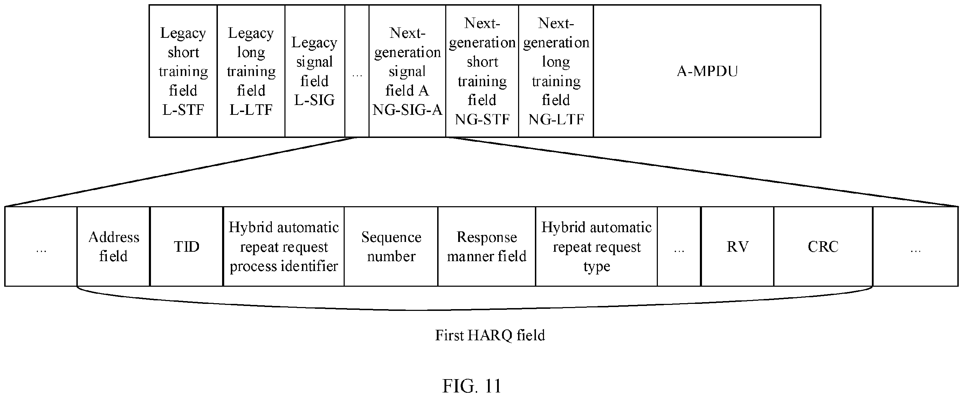

Manner 2: The first HARQ field is located in the NG-SIG-A in the physical layer preamble in the PPDU, which is as shown in FIG. 11. In this way, a CRC check needs to be performed only once on the first HARQ field and the NG-SIG-A. This can reduce check complexity.

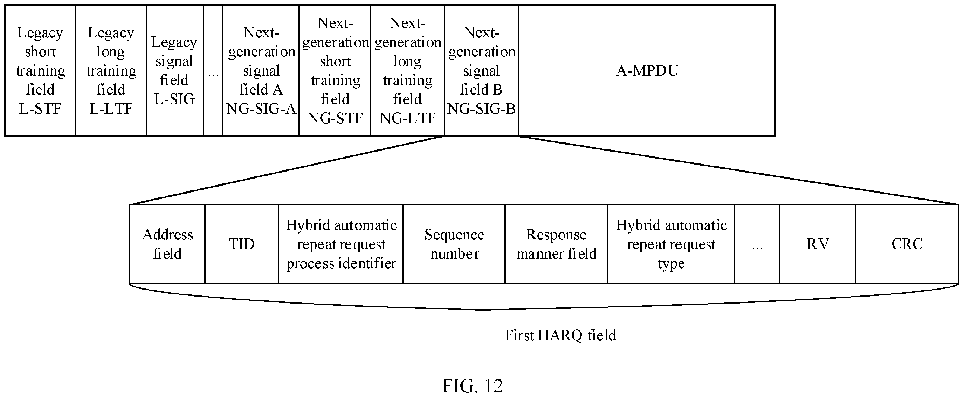

Manner 3: The first HARQ field is located between an NG-LTF in the physical layer preamble in the PPDU and the A-MPDU in the PPDU, which is as shown in FIG. 12. In this way, channel resources can be used efficiently.

In some possible implementations, as shown in FIG. 10 to FIG. 12, the first HARQ field includes one or more of an address field, a traffic identifier (traffic identifier, TID) field, a hybrid automatic repeat request process identifier (HARQ process identifier), a sequence number (sequence number), a response manner field, a hybrid automatic repeat request type (HARQ type), a redundancy version (redundancy version, RV), a CRC, and the like. Locations of the address field, the TID, the hybrid automatic repeat request process identifier, the sequence number, the response manner field, the hybrid automatic repeat request type, the RV, and the CRC in the first HARQ field are not limited. For example, the response manner field may be between the TID and the sequence number.

As shown in FIG. 10 to FIG. 12, the address field in the first HARQ field includes an address (that is, a receiving address) of the first device and an address (that is, a transmitting address) of the second device. In this way, the first device may determine, based on the address of the first device and the address of the second device in the address field, that the PPDU is sent by the second device to the first device. In this way, even if all the MPDUs in the A-MPDU in the PPDU are incorrectly received, the first device still needs to send the BA frame to the second device.

As shown in FIG. 10 to FIG. 12, the TID in the first HARQ field is used to identify a service of the PPDU transmitted at this time.

As shown in FIG. 10 to FIG. 12, the response manner field in the first HARQ field is used to indicate a manner in which the first device responds to the A-MPDU, and the first device may determine, based on the response manner field, a manner in which the first device responds to the BA frame. The manner of responding to the BA frame may be a first response manner or a second response manner. The first response manner may be that the first device responds upon receiving a short interframe space (short interframe space, SIFS) of the PPDU. The second response manner may be that the first device does not respond after receiving the SIFS of the PPDU, but sends the BA frame to the second device after receiving a block acknowledgment request (block acknowledgment request, BAR). Specifically, a bit size of the response manner field may be 1 bit, 2 bits, or the like. For example, that a value of the response manner field is "1" indicates that a manner in which the first device sends the BA frame to the second device is the first response manner, and that the value of the response manner field is "0" indicates that the manner in which the first device sends the BA frame to the second device is the second response manner. For another example, that a value of the response manner field is "00" indicates that a manner in which the first device sends the BA frame to the second device is the first response manner, and that the value of the response manner field is "11" indicates that the manner in which the first device sends the BA frame to the second device is the second response manner. For another example, the response manner may be responding according to an ack policy (ack policy). As shown in Table 4, that a value of the response manner field is "00" indicates that the manner in which the first device sends the BA frame to the second device is the first response manner, and that the value of the response manner is "11" indicates that the manner in which the first device sends the BA frame to the second device is the second response manner.

**Table 4**

| Response manner field | Meaning |
|---|---|
| 00 | Common immediate response or block acknowledgment immediate response (the first response manner) |
| 10 | No response |
| 01 | No clear response |
| 11 | No immediate response (the second response manner) |

As shown in FIG. 10 to FIG. 12, the sequence number of the first HARQ field is used to identify a sequence number of an MSDU or an A-MSDU included in the MPDU in the A-MPDU. In this way, even if all the MPDUs in the A-MPDU are incorrectly received, the first device may determine, based on the sequence number, a sequence number of an MSDU or an A-MSDU included in an incorrect MPDU. In this way, when receiving HARQ retransmitted data from the second device, the first device may combine and decode the retransmitted data based on the sequence number of the MSDU or the A-MSDU. This improves decoding accuracy.

It should be noted that a location of the first HARQ field in a next generation extended range single user PPDU (next generation extended range SU PPDU, NG ER SU PPDU) is similar to a location of the first HARQ field in an NG SU PPDU. To avoid repetition, details are not described in this embodiment of this application.

In the MU PPDU, there are at least two optional manners of a location of the first HARQ field in the PPDU.

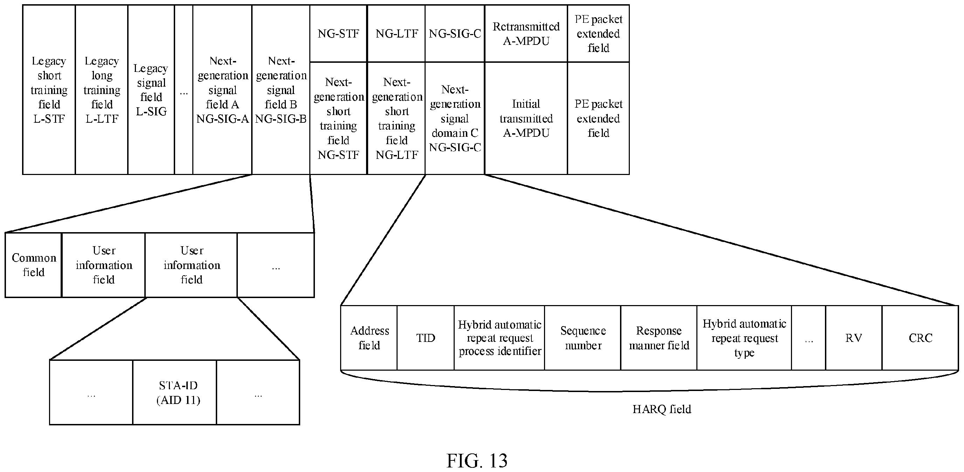

Manner 1: An NG-SIG-C in which the first HARQ field is located is located between the NG-LTF in the physical layer preamble in the PPDU and the A-MPDU in the PPDU, which is as shown in FIG. 13. In this way, separate CRC checks are performed on the NG-SIG-A, the NG-SIG-B, and the NG-SIG-C. The NG-SIG-C appears in the PPDU only when HARQ transmission needs to be performed by using the first HARQ field. When HARQ transmission does not need to be performed, the NG-SIG-C does not appear in the PPDU. This can reduce signaling overheads. Specifically, the second device may indicate, by using a specific bit in the NG-SIG-A or the NG-SIG-B, whether the NG-SIG-C appears in the PPDU, or may indicate, in another manner, whether the NG-SIG-C appears in the PPDU. In this way, the first device may determine, based on the specific bit in the NG-SIG-A or the NG-SIG-B or in another indication manner, whether the NG-SIG-C exists in the PPDU. In addition, when the NG-SIG-C is located between the NG-LTF and the A-MPDU, channel resources can be used efficiently.

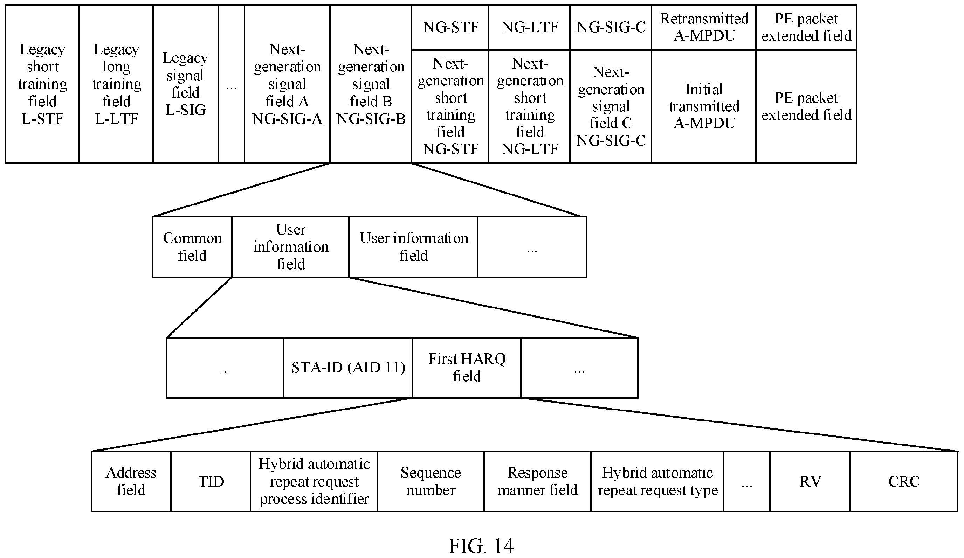

Manner 2: The first HARQ field is located in a user information field in the next-generation signal field NG-SIG-B in the physical layer preamble in the PPDU, which is as shown in FIG. 14. In this way, the CRC check needs to be performed only once on the first HARQ field and the NG-SIG-B. This can reduce check complexity.

Meanings of address fields in the first HARQ field in FIG. 13 and FIG. 14 in the MU PPDU are different from address fields in the first HARQ field in FIG. 9 to FIG. 11 in the SU PPDU, and meanings of other elements are similar. The following focuses on describing the address fields in the first HARQ field in FIG. 13 and FIG. 14 in the MU PPDU. In a possible implementation, the address fields in FIG. 13 and FIG. 14 in the MU PPDU include the address (the receiving address) of the first device and the address (the transmitting address) of the second device. In another possible implementation, the address fields in FIG. 13 and FIG. 14 in the MU PPDU may include only one address. The user information field in the NG-SIG-B in FIG. 13 and FIG. 14 in the MU PPDU includes a STA-ID, therefore, only one address is required in the first HARQ field. The following discusses a case in which the address fields in FIG. 13 and FIG. 14 includes only one address in three cases. The address included in the address fields in FIG. 13 and FIG. 14 and the STA-ID in the user information field in the NG-SIG-B are used to indicate to the first device whether the PPDU is sent to the first device. In this way, the first device determines, based on one address in the address fields and the STA-ID in the user information field, whether the PPDU is sent by the second device to the first device. When the first device determines that the PPDU is sent by the second device to the first device, even if all the MPDUs in the A-MPDU in the PPDU are incorrectly received, the first device still needs to send the BA frame to the second device. This is specifically described below.

Case 1: A value of the address field in FIG. 13 and FIG. 14 is the address (for example, a MAC address) of the second device, and a value of the STA-ID field is a plurality of bits of an association identifier AID of the first device. For example, the second device is an AP, and the first device is a STA. In a scenario of a plurality of basic service sets (basic service set, BSS), the value of the STA-ID field may be lowest 11 bits of the AID of the first device. The first device may determine, based on the address of the second device, that a second device associated with the first device sends the PPDU. The first device further matches the value of the STA-ID field with the lowest 11 bits of the AID of the first device. If matching succeeds, the first device may determine that the PPDU is sent by the second device to the first device.

Case 2: A value of the address field in FIG. 13 and FIG. 14 is the address (for example, a MAC address) of the second device, and a value of the STA-ID field is a plurality of bits of an association identifier AID of the second device. For example, the second device is a STA, and the first device is an AP. When receiving the PPDU, the first device determines, based on the address of the second device in the address field, that the PPDU is sent by an associated second device. In addition, the value of the STA-ID field matches lowest 11 bits of the associated second device. In this way, the first device may determine that the PPDU is sent by the associated second device.

Case 3: A value of the address field in FIG. 13 and FIG. 14 is the address (for example, a MAC address) of the first device, and a value of the STA-ID field is a plurality of bits of an association identifier AID of the second device. For example, the second device is a STA, and the first device is an AP. When receiving the PPDU, the first device may determine, based on the address of the first device in the address fields, that the PPDU is sent to the first device. The first device further determines, by a fact that the value of the STA-ID field matches lowest 11 bits of a associated second device, that the PPDU is sent by the second device to the first device.

It should be noted that in the foregoing three cases, description is merely an example. Specifically, in actual application, the value of the STA-ID field is several bits of the AID of the first device or the second device, for example, may be 11 bits or 12 bits. A specific quantity of bits of the AID is not limited in this embodiment of this application.

In a TB PPDU, before the method 100, the first device needs to determine whether the second device has sent the PPDU. In the TB PPDU, for example, the first device may be an AP, and the second device may be a STA. A sending trigger frame of the first device schedules the second device to send the PPDU, that is, the first device knows which second device sends the PPDU on which resources. However, when the second device finds that all MPDUs are incorrectly received, the first device is unsure whether all the MPDUs are incorrectly received because the second device does not send the PPDU or whether all the MPDUs are incorrectly received because the second device has sent the PPDU but channel quality of the first device is poor. When the second device does not send the PPDU, the first device does not need to reply with the BA frame. When the second device has sent the PPDU, but all the MPDUs received by the first device are incorrectly received, the first device needs to reply to the second device with the BA frame. Therefore, in the TB PPDU, the first device needs to determine, in at least one of the following three manners, whether the second device has sent the PPDU.

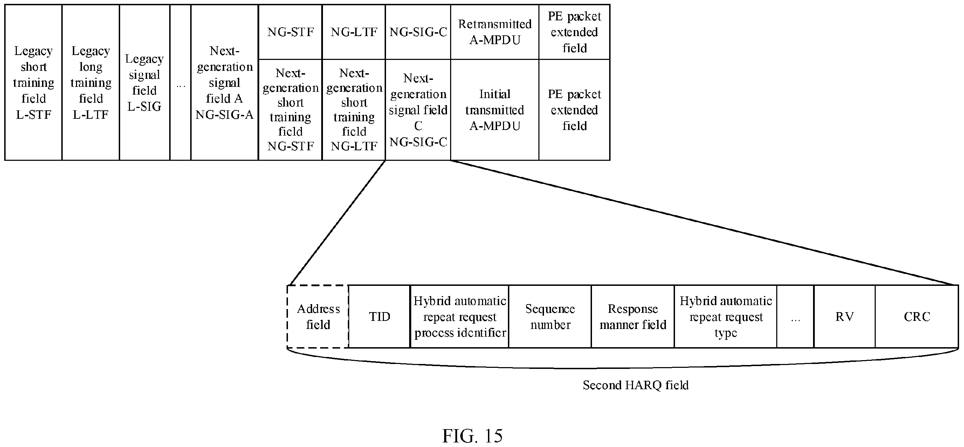

Manner 1: The PPDU includes a second HARQ field, and the second HARQ field is used to indicate to the first device whether the second device has sent the PPDU. In this way, the first device may determine, based on the second HARQ field, whether the second device has sent the PPDU. In other words, if the first device may detect the second HARQ field or any element in the second HARQ field, it may be considered that the second device has sent the PPDU. The second HARQ field is located between the NG-LTF in the physical layer preamble in the PPDU and the A-MPDU in the PPDU, which is as shown in FIG. 15. In this way, channel resources can be used efficiently. An address field in the second HARQ field is different from the address field in the first HARQ field in the SU PPDU or the MU PPDU, and another element in the second HARQ field is similar to another element in the first HARQ field in the SU PPDU or the MU PPDU. To avoid repetition, details are not described herein. The following briefly describes only the address field in the second HARQ field. The address field in the second HARQ field may be described in the following three cases (a), (b), and (c).
(a). The address field may include only the address of the second device.
(b) The address field does not exist, that is, neither the address of the first device nor the address of the second device exists in the second HARQ field.
(c). The address field includes both the address of the first device and the address of the second device.

Manner 2: The NG-STF and/or the NG-LTF in the PPDU indicate/indicates to the first device that the second device has sent the TB PPDU. In this way, the first device may determine, based on the NG-STF and/or the NG-LTF, that the second device has sent the TB PPDU. As shown in FIG. 15, if the first device detects at least one or both of the NG-STF and the NG-LTF in a signal synchronization manner or an energy detection manner, the first device may determine that the second device has sent the PPDU. In this way, even if all the MPDUs included in the A-MPDU received by the first device are incorrectly received, the first device still needs to send the BA frame to the second device. In Manner 2, FIG. 15 may not include the NG-SIG-C.

Manner 3: At least one MPDU delimiter in the A-MPDU is used to indicate to the first device that the second device has sent the TB PPDU. In this way, the first device may determine, based on the at least one MPDU delimiter, that the second device has sent the PPDU. As shown in FIG. 2, a plurality of MPDUs in the A-MPDU are separated by using delimiters. When all the MPDUs included in the A-MPDU received by the first device are incorrectly received, but the first device detects one or more MPDU delimiters, it may consider that the second device has sent the PPDU. In this way, the first device needs to reply to the second device with the BA frame.

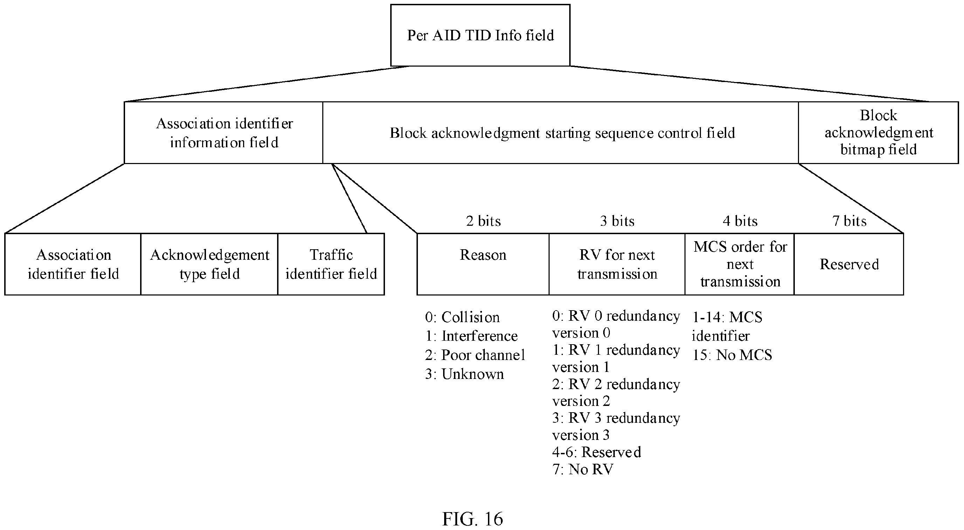

The foregoing describes formats and locations of HARQ fields in different PPDU formats. The first device may determine, based on the HARQ field or information other than the HARQ field, that the second device has sent the PPDU. In this way, when all the PPDUs received by the first device are incorrectly received, the first device sends the BA frame to the second device. As described above, when the first device sends the BA frame to the second device, the first value of the acknowledgment type field and the second value of the traffic identifier field in the BA frame are used to jointly indicate that all the MPDUs included in the A-MPDU are incorrectly received. As shown in FIG. 16, a block acknowledgment starting sequence control field in the BA frame may further indicate at least one of a reason why all the MPDUs included in the A-MPDU are incorrectly received, namely, reason feedback (reason feedback), an RV for next transmission, and an MCS order for next transmission. The reason why all the MPDUs included in the A-MPDU are incorrectly received may be a collision (collision), interference (interference), a poor channel (poor channel), or unknown (unknown). In this way, when receiving the BA frame, the second device may determine, based on a reason indication in the BA frame, the reason why all the MPDUs are incorrectly received by the first device, and perform HARQ retransmission based on the reason. For example, if the reason for all incorrectly receiving is a collision, there is a low probability that the collision occurs again. Therefore, the second device may perform HARQ retransmission by using a previous modulation scheme. The reason why all the MPDUs included in the A-MPDU are incorrectly received, the RV for next transmission, and the MCS order for next transmission indicated in the block acknowledgment starting sequence control field in the BA frame, and the first value of the acknowledgment type field and the second value of the traffic identifier field in the BA frame are used to jointly indicate that all the MPDUs included in the A-MPDU are incorrectly received. This may be referred to as an indication with feedback. Only the first value of the acknowledgment type field and the second value of the traffic identifier field in the BA frame, not with the block acknowledgment starting sequence control field in the BA frame, are used to jointly indicate that all the MPDUs included in the A-MPDU are incorrectly received. This may be referred to as an indication without feedback. For example, in Table 5, ack type = 1 and TID = 12 are used to indicate All NACK without feedback, and ack type = 1 and TID = 13 are used to indicate All NACK with feedback. Certainly, indication manners of the two are interchangable. For another example, in Table 6, ack type = 0 and TID = 14 are used to indicate All NACK without feedback, and ack type = 0 and TID = 15 are used to indicate All NACK with feedback. Certainly, indication manners of the two are interchangeable.

**Table 5**

| Ack type | TID | Whether a block starting sequence control field and a block acknowledgment bit field appear | Content of per association identifier traffic identifier information field in a multi-STA BA frame |
|---|---|---|---|
| 1 | 12 | Not appear | Indication without feedback |
| 1 | 13 | A block starting sequence control field appears and a block acknowledgment bit field does not appear | Indication with feedback |

**Table 6**

| Ack type | TID | Whether a block starting sequence control field and a block acknowledgment bit field appear | Content of per association identifier traffic identifier information field in a multi-STA BA frame |
|---|---|---|---|
| 0 | 14 | Not appear | Indication without feedback |
| 0 | 15 | A block starting sequence control field appears and a block acknowledgment bit field does not appear | Indication with feedback |

The following three cases are described.
Case 1: There is only the indication with feedback, that is, there is only a third row of Table 5 or Table 6.
Case 2: There is only the indication without feedback, that is, there is only a second row of Table 5 or Table 6.
Case 3: There are both the indication with feedback and the indication without feedback, that is, there are only a third row and a second row in Table 5 or Table 6.

In the foregoing three different cases, the first value of the acknowledgment type field and the second value of the traffic identifier field in the BA frame may be the same or different. In other words, in different cases, the first value and the second value are not limited. For example, in Case 1, the first value is 1, and the second value is 13. In Case 2, the first value may be 1, and the second value is 12. In Case 3, the first value may be 0, the second value maybe 14.

As described above, when the first device determines, with reference to the first HARQ field or the second HARQ field, that all the MPDUs included in the A-MPDU are incorrectly received, the first device may determine, based on the first HARQ field or the second HARQ field, that the PPDU is sent by the second device to the first device. Certainly, in actual application, the HARQ field may exist independently, that is, the first device does not need to determine, based on the HARQ field, that the PPDU is sent by the second device to the first device. The following describes a HARQ field. The following HARQ field may be the foregoing first HARQ field or the foregoing second HARQ field.

The first device obtains a PPDU, where a physical layer preamble included in the PPDU includes a HARQ field. Locations of HARQ fields in different PPDU formats may be different.

In an optional embodiment, if the PPDU is an SU PPDU, the HARQ field is located between the NG-SIG-A and the NG-STF in the physical layer preamble in the PPDU (as shown in FIG. 10, the HARQ field is in the NG-SIG-B), the HARQ field is located in the NG-SIG-A in the physical layer preamble in the PPDU (as shown in FIG. 11), or HARQ field is located between the NG-LTF in the physical layer preamble in the PPDU and the A-MPDU included in the PPDU (as shown in FIG. 12, the HARQ field is in the NG-SIG-B).

In an optional embodiment, if the PPDU is an SU PPDU, an address field in the HARQ field includes the address (the receiving address) of the first device and the address (the transmitting address) of the second device.

In an optional embodiment, if the PPDU is an MU PPDU, the HARQ field is located between the NG-LTF in the physical layer preamble in the PPDU and the A-MPDU in the PPDU (as shown in FIG. 13, the HARQ field is in the NG-SIG-C), or the HARQ field is located in a user information field in a next-generation signal field NG-SIG-B in a physical layer preamble in the first PPDU (as shown in FIG. 14).

In an optional embodiment, if the PPDU is an MU PPDU, a value of the address field in the HARQ field may include two addresses, that is, the address (the receiving address) of the first device and the address (the transmitting address) of the second device. Alternatively, a value of the address field in the HARQ field may include only one address, for example, the address (the transmitting address) of the second device, or the value of the address field in the HARQ field is the address (the receiving address) of the first device.

In an optional embodiment, if the PPDU is a TB PPDU, the HARQ field is located between the NG-LTF in the physical layer preamble in the PPDU and the A-MPDU in the PPDU (as shown in FIG. 15, the HARQ field is in the NG-SIG-C).

In an optional embodiment, if the PPDU is a TB PPDU, the HARQ field may include the address field or may not include the address field. When the HARQ field includes the address field, the value of the address field may be the address (the receiving address) of the first device and the address (the transmitting address) of the second device. Alternatively, the value of the address field may be the address (the transmitting address) of the second device.

In an optional embodiment, the response manner field in the HARQ field is used to indicate a manner in which the first device responds to the A-MPDU, and the first device may determine, based on the response manner field, the manner in which the first device responds to the A-MPDU.

It should be noted that the response manner field in the HARQ field may depend on any embodiment of this application, or may exist independently of any embodiment of this application.

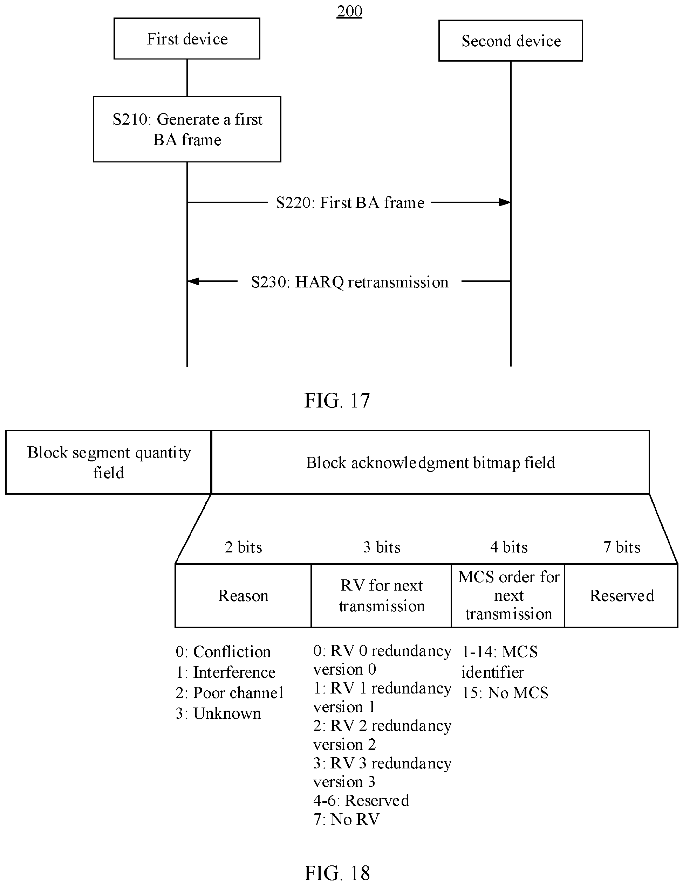

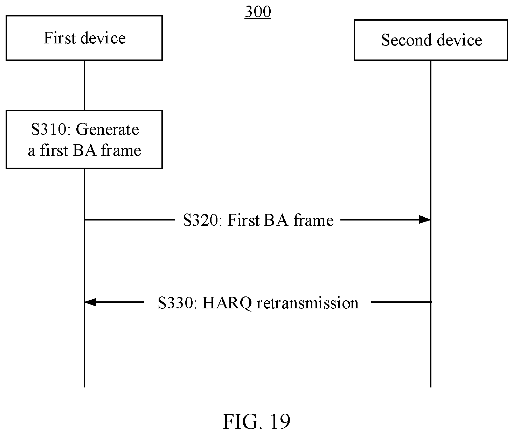

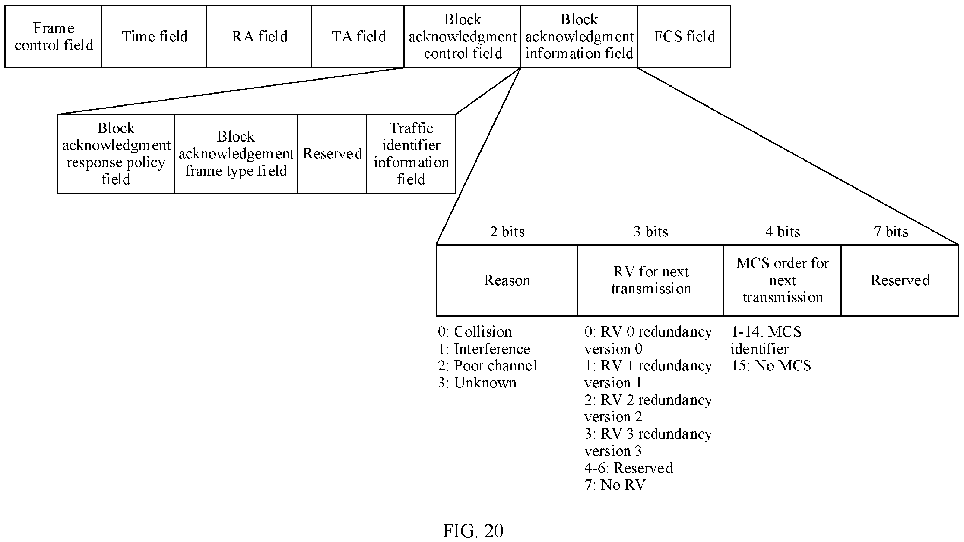

The method 100 in FIG. 9 describes a case in which the first device determines, based on a joint indication of the first value of the acknowledgment type field and the second value of the traffic identifier field in the BA frame, that all the MPDUs included in the A-MPDU are incorrectly received. With reference to FIG. 17 and FIG. 18, the following describes how the first device indicates, based on a first value of a segment quantity field in a first BA frame, that all MPDUs included in a first A-MPDU are incorrectly received. With reference to FIG. 19 and FIG. 20, the following describes how the first device indicates, based on a first value of a block acknowledgment type field in a first BA frame, that all MPDUs included in a first A-MPDU are incorrectly received.

FIG. 17 shows a retransmission method 200 according to an embodiment of this application, and the method includes the following steps.

S210: A first device generates a first BA frame, where a first value of a block segment quantity field in the first BA frame is used to indicate that all MPDUs included in a first A-MPDU are incorrectly received. For example, the segment quantity field is a segment quantity field in the block acknowledgment starting sequence control field in FIG. 8.

Before S210, the method 200 further includes: The first device receives a first PPDU sent by a second device, where the first PPDU includes a physical layer preamble and the first A-MPDU.

In an optional embodiment, a value of a block acknowledgment bitmap field in the first BA frame is used to indicate at least one of a reason why all the MPDUs included in the first A-MPDU are incorrectly received, a redundancy version for next transmission, and a modulation and coding scheme order for next transmission, which is for example as shown in FIG. 18. For example, the block acknowledgment bitmap field is a block acknowledgment bitmap field in the block acknowledgment information field in FIG. 8. The reason why all the MPDUs included in the A-MPDU are incorrectly received may be a collision (collision), interference (interference), a poor channel (poor channel), or unknown (unknown). In this way, when receiving the first BA frame, the second device may determine, based on a reason indication in the first BA frame, the reason why all the MPDUs are incorrectly received by the first device, and perform HARQ retransmission based on the reason. For example, if the reason for all incorrectly receiving is a conflict, a low probability that the collision occurs again is relatively low. Therefore, the second device may perform HARQ retransmission by using a previous modulation scheme. The value of the block acknowledgment bitmap field in the first BA frame indicates the reason why all the MPDUs included in the A-MPDU are incorrectly received, the RV for next transmission, and the MCS order for next transmission. The first value of the segment quantity field in the first BA frame is used to indicate that all the MPDUs included in the A-MPDU are incorrectly received, which may be referred to as an indication with feedback. Only a first value of the segment quantity field in the first BA frame, not with the block acknowledgment bitmap field in the first BA frame, is used to jointly indicate that all the MPDUs included in the A-MPDU are incorrectly received. This may be referred to as an indication that no feedback is provided.

S220: The first device sends the first BA frame to the second device, and the second device receives the first BA frame sent by the first device.

S230: The second device performs HARQ retransmission based on the BA frame.

Different values of the block segment quantity field may indicate different meanings. In an optional embodiment, the method 200 further includes: The first device generates a second BA frame, where a second value of a block segment quantity field in the second BA frame is used to indicate that all MPDUs included in a second A-MPDU included in a second PPDU are correctly received; and the first device sends the second BA frame to the second device.

For example, as shown in Table 7, that the second value is 1 indicates that all the MPDUs of the second A-MPDU are correctly received (all ack). In this case, the block acknowledgment bitmap field does not appear. That the first value is 2 indicates that all the MPDUs of the first A-MPDU are incorrectly received (all nack). In this case, a block acknowledgment bitmap field subfield does not appear.

**Table 7**

| Block segment quantity | Whether a block acknowledgment bitmap field appears | Content indicated by a block acknowledgment information field in a BA frame |
|---|---|---|
| 1 | Not appear | All ack |
| 2 | Not appear | All nack |

For another example, as shown in Table 8, that the second value is 1 indicates that all the MPDUs of the second A-MPDU are correctly received (all ack). In this case, the block acknowledgment bitmap field does not appear. That the first value is 2 indicates that all the MPDUs of the first A-MPDU are incorrectly received (all nack). In this case, bits in the block acknowledgment bitmap field are reused. The value of the block acknowledgment bitmap field is used to indicate at least one of the reason why all the MPDUs included in the first A-MPDU are incorrectly received, the redundancy version for next transmission, and the modulation and coding scheme order for next transmission. In this case, that the first value is 2 is used to indicate an indication with feedback, which is as shown in FIG. 18.

**Table 8**

| Block segment quantity | Whether a block acknowledgment bit field appears | Content indicated by a block acknowledgment information field in a BA frame |
|---|---|---|
| 1 | Not appear | All ack |
| 2 | Appear | All nack (with feedback) |

For another example, as shown in Table 9, that the second value is 1 indicates that all the MPDUs of the second A-MPDU are correctly received (all ack). In this case, the block acknowledgment bitmap subfield does not appear. That the first value is 2 indicates that all the MPDUs of the first A-MPDU are incorrectly received (all nack). That the first value is 3 indicates that all the MPDUs of the first A-MPDU are incorrectly received (all nack), and indicates at least one of the reason for all incorrectly receiving, the redundancy version for next transmission, and the modulation and coding scheme order for next transmission. In this case, the bits in the block acknowledgment bitmap field are reused, and are used to indicate at least one of the reason for all incorrectly receiving, the redundancy version for next transmission, and the modulation and coding scheme order for next transmission.

**Table 9**

| Block segment quantity | Whether a block acknowledgment bit field appears | Content indicated by a block acknowledgment information field in a BA frame |
|---|---|---|
| 1 | Not appear | All ack |
| 2 | Not appear | All nack |
| 3 | Appear | All nack (with feedback) |

FIG. 19 shows a retransmission method 300 according to an embodiment of this application, and the method includes the following steps.

S310: A first device generates a first BA frame, where a first value of a block acknowledgment frame type field in the first BA frame is used to indicate that all MPDUs included in a first A-MPDU are incorrectly received.

Before S310, the method 300 further includes: The first device receives a first physical layer protocol data unit PPDU sent by a second device, where the first PPDU includes a physical layer preamble and the first A-MPDU.

S320: The first device sends the first BA frame to the second device, and the second device receives the first BA frame sent by the first device.

S330: The second device performs HARQ retransmission based on the BA frame.

In an optional embodiment, a value of a block acknowledgment information field in the first BA frame is used to indicate at least one of a reason why all the MPDUs included in the first A-MPDU are incorrectly received, a redundancy version for next transmission, and a modulation and coding scheme order for next transmission, which is for example as shown in FIG. 20. For example, the block acknowledgment information field is the block acknowledgment information field in FIG. 6. The reason why all the MPDUs included in the A-MPDU are incorrectly received may be a collision (collision), interference (interference), a poor channel (poor channel), or unknown (unknown). In this way, when receiving the first BA frame, the second device may determine, based on a reason indication in the first BA frame, the reason why all the MPDUs are incorrectly received by the first device, and perform HARQ retransmission based on the reason. For example, if the reason for all incorrectly receiving is a conflict, a low probability that the collision occurs again is relatively low. Therefore, the second device may perform HARQ retransmission by using a previous modulation scheme. The value of the block acknowledgment information field in the first BA frame indicates the reason why all the MPDUs included in the A-MPDU are incorrectly received, the RV for next transmission, and the MCS order for next transmission. The first value of the block acknowledgment frame type field in the first BA frame is used to indicate that all the MPDUs included in the A-MPDU are incorrectly received, which may be referred to as an indication with feedback. Only the first value of the block acknowledgment frame type field in the first BA frame, not with the block acknowledgment frame type field in the first BA frame, is used to jointly indicate that all the MPDUs included in the A-MPDU are incorrectly received. This may be referred to as an indication without feedback.

Different values of the block acknowledgment frame type field may indicate different meanings. In an optional embodiment, the method 300 further includes: The first device generates a second BA frame, where a second value of a block acknowledgment frame type field in the second BA frame is used to indicate that all MPDUs included in a second A-MPDU included in a second PPDU are correctly received; and the first device sends the second BA frame to the second device.

For example, as shown in Table 10, that the second value is 4 indicates that all the MPDUs of the second A-MPDU are correctly received (all ack). In this case, the block acknowledgment information field does not appear. That the first value is 5 indicates that all the MPDUs of the first A-MPDU are incorrectly received (all nack). In this case, a block acknowledgment information field does not appear.

**Table 10**

| Block acknowledgment frame type | Whether a block acknowledgment information field appears | Content indicated by a block acknowledgment frame type in a BA frame |
|---|---|---|
| 9 | Not appear | All ack |
| 5 | Not appear | All nack |

For another example, as shown in Table 11, that the second value is 4 indicates that all the MPDUs of the second A-MPDU are correctly received (all ack). In this case, the block acknowledgment information field does not appear. That the first value is 5 indicates that all the MPDUs of the first A-MPDU are incorrectly received (all nack). In this case, bits in the block acknowledgment information field are reused, used to indicate feedback information. The block acknowledgment information field is used to indicate at least one of the reason why all the MPDUs included in the first A-MPDU are incorrectly received, the redundancy version for next transmission, and the modulation and coding scheme order for next transmission. In this case, that the first value is 5 is used to indicate an indication with feedback, which is as shown in FIG. 20.

**Table 11**

| Block acknowledgment frame type | Whether a block acknowledgment information field appears | Content indicated by a block acknowledgment frame type in a BA frame |
|---|---|---|
| 4 | Not appear | All ack |
| 5 | Appear | All nack (with feedback) |

For another example, as shown in Table 12, that the second value is 7 indicates that all the MPDUs of the second A-MPDU are correctly received (all ack). In this case, the block acknowledgment information field does not appear. That the first value is 8 indicates that all the MPDUs of the first A-MPDU are incorrectly received (all nack) and without feedback. In this case, the block acknowledgment information field does not appear. That the first value is 9 indicates that all the MPDUs of the first A-MPDU are incorrectly received (all nack), and indicates at least one of the reason for all incorrectly receiving, the redundancy version for next transmission, and the modulation and coding scheme order for next transmission. In this case, the block acknowledgment information field is reused, and is used to indicate at least one of the reason for all incorrectly receiving, the redundancy version for next transmission, and the modulation and coding scheme order for next transmission.

**Table 12**

| Block acknowledgment frame type | Whether a block acknowledgment information field appears | Content indicated by a block acknowledgment frame type in a BA frame |
|---|---|---|
| 7 | Not appear | All ack |
| 8 | Not appear | All nack |
| 9 | Appear | All nack (with feedback) |

It should be noted that the BA frame in FIG. 9 is different from the first BA frame and the second BA frame in FIG. 17 and FIG. 19, and correspondingly, the first value in FIG. 9 is different from the first value in FIG. 17 and FIG. 19, and the second value in FIG. 9 is different from the second value in FIG. 17 and FIG. 19. Similarly, the first BA frame and the second BA frame in FIG. 17 is different from those in FIG. 19. Correspondingly, the first value in FIG. 17 is different from the first value in FIG. 19, and the second value in FIG. 17 is different from the second value in FIG. 19.

It should also be noted that the foregoing address in the address field may be but is not limited to a MAC address, an AID, a HARQ dedicated address allocated to the first device, a combination of a BSS color and an AID, or the like.

The retransmission method in the embodiments of this application is described above. A retransmission apparatus in the embodiments of this application is described below. The retransmission apparatus in the embodiments of this application includes a retransmission apparatus applied to a first device and a retransmission apparatus applied to a second device. It should be understood that the retransmission apparatus applied to the first device is the first device in the foregoing method, and has any function of the first device in the foregoing method. The retransmission apparatus applied to the second device is the second device in the foregoing method, and has any function of the second device in the foregoing method.

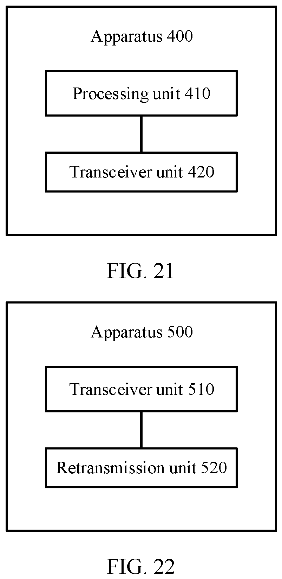

FIG. 21 shows a schematic block diagram of a retransmission apparatus 400 according to an embodiment of this application. The apparatus 400 may correspond to the first device described in the foregoing method, or may correspond to a chip or a component of the first device. Each module or unit in the apparatus 400 may be separately configured to perform actions or processing processes performed by the first device in the foregoing method. As shown in FIG. 21, the retransmission apparatus 400 may include a processing unit 410 and a transceiver unit 420.

The processing unit 410 is configured to generate a block acknowledgment BA frame, where a first value of an acknowledgment type field and a second value of a traffic identifier field in the BA frame are used to jointly indicate that all media access control protocol data units MPDUs included in an aggregated media access control protocol data unit A-MPDU are incorrectly received.

The transceiver unit 420 is configured to send the BA frame to a second device.

In an optional embodiment, the transceiver unit 420 is further configured to: before generating the BA frame, receive a physical layer protocol data unit PPDU sent by the second device, where the PPDU includes a physical layer preamble and the A-MPDU.

In an optional embodiment, the physical layer preamble in the PPDU includes a first hybrid automatic repeat request HARQ field, and an address field in the first HARQ field is used to indicate the apparatus whether the PPDU is sent to the apparatus.

In an optional embodiment, a response manner field in the first HARQ field is used to indicate a manner in which the apparatus responds to the A-MPDU.

In an optional embodiment, the PPDU is a single user SU PPDU; and the first HARQ field is located between a next-generation signal field NG-SIG-A and a next-generation short training field NG-STF in the physical layer preamble in the PPDU, the first HARQ field is located in an NG-SIG-A in the physical layer preamble in the PPDU, or the first HARQ field is located between a next generation long training field NG-LTF in the physical layer preamble in the PPDU and the A-MPDU in the PPDU.

In an optional embodiment, the address field includes an address of the apparatus and an address of the second device.

In an optional embodiment, the PPDU is a multi-user MU PPDU; and the first HARQ field is located between a next-generation long training field NG-LTF in the physical layer preamble in the PPDU and the A-MPDU in the PPDU, or the first HARQ field is located in a user information field in a next-generation signal field NG-SIG-B in the physical layer preamble in the PPDU.

In an optional embodiment, a STA-ID field in the user information field and the address field in the first HARQ field are used to indicate to the apparatus whether the PPDU is sent to the apparatus.

In an optional embodiment, a value of the STA-ID field is a plurality of bits of an association identifier AID of the apparatus, and a value of the address field in the first HARQ field is the address of the second device; a value of the STA-ID field is a plurality of bits of an association identifier AID of the second device, and a value of the address field in the first HARQ field is the address of the second device; or a value of the STA-ID field is a plurality of bits of an association identifier AID of the second device, and a value of the address field in the first HARQ field is the address of the apparatus.

In an optional embodiment, the PPDU is a trigger basic TB PPDU, the PPDU includes a second HARQ field, the second HARQ field is used to indicate to the first device whether the second device has sent the PPDU, and the second HARQ field is located between a next-generation long training field NG-LTF in the physical layer preamble in the PPDU and the A-MPDU in the PPDU.

In an optional embodiment, a response manner field in the second HARQ field is used to indicate a manner in which the apparatus responds to the A-MPDU.

In an optional embodiment, the PPDU is a TB PPDU, and an NG-STF and/or an NG-LTF in the PPDU are/is used to indicate to the first device that the second device has sent the TB PPDU.

In an optional embodiment, the PPDU is a TB PPDU, and at least one MPDU delimiter in the A-MPDU is used to indicate to the first device that the second device has sent the TB PPDU.

In an optional embodiment, a block acknowledgment starting sequence control field in the BA frame is used to indicate at least one of a reason why all the MPDUs included in the A-MPDU are incorrectly received, a redundancy version used for next transmission, and a modulation and coding scheme order used for next transmission.

It should be understood that the retransmission apparatus 400 provided in this embodiment of this application is the first device in the foregoing method, and has any function of the first device in the foregoing method. For specific details, refer to the foregoing method. Details are not described herein again.

FIG. 22 shows a schematic block diagram of a retransmission apparatus 500 according to an embodiment of this application. The apparatus 500 may correspond to the second device described in the foregoing method, or may correspond to a chip or a component of the second device. Each module or unit in the apparatus 500 may be separately configured to perform actions or processing processes performed by the second device in the foregoing method. As shown in FIG. 22, the retransmission apparatus 500 may include a transceiver unit 510 and a retransmission unit 520.

The transceiver unit 510 is configured to receive a block acknowledgment BA frame sent by a first device, where a first value of an acknowledgment type field and a second value of a traffic identifier field in the BA frame are used to jointly indicate that all media access control protocol data units MPDUs included in an aggregated media access control protocol data unit A-MPDU are incorrectly received.

The retransmission unit 520 is configured to perform hybrid automatic repeat request HARQ retransmission based on the BA frame.

In an optional embodiment, the transceiver unit 510 is further configured to: before receiving the BA frame sent by the first device, send a physical layer protocol data unit PPDU to the first device, where the PPDU includes a physical layer preamble and the A-MPDU.

In an optional embodiment, the physical layer preamble in the PPDU includes a first HARQ field, and an address field in the first HARQ field is used to indicate to the first device whether the PPDU is sent to the first device.

In an optional embodiment, a response manner field in the first HARQ field is used to indicate a manner in which the first device responds to the A-MPDU.

In an optional embodiment, the PPDU is a single user SU PPDU; and the first HARQ field is located between a next-generation signal field NG-SIG-A and a next-generation short training field NG-STF in the physical layer preamble in the PPDU, the first HARQ field is located in an NG-SIG-A in the physical layer preamble in the PPDU, or the first HARQ field is located between a next generation long training field NG-LTF in the physical layer preamble in the PPDU and the A-MPDU in the PPDU.

In an optional embodiment, the address field includes an address of the first device and an address of the apparatus.

In an optional embodiment, the PPDU is a multi-user MU PPDU; and the first HARQ field is located between a next-generation long training field NG-LTF in the physical layer preamble in the PPDU and the A-MPDU in the PPDU, or the first HARQ field is located in a user information field in a next-generation signal field NG-SIG-B in the physical layer preamble in the PPDU.

In an optional embodiment, a STA-ID field in the user information field and the address field in the first HARQ field are used to indicate to the first device whether the PPDU is sent to the first device.

In an optional embodiment, a value of the STA-ID field is a plurality of bits of an association identifier AID of the first device, and a value of the address field in the first HARQ field is an address of the apparatus; a value of the STA-ID field is a plurality of bits of an AID of the apparatus, and a value of the address field in the first HARQ field is an address of the apparatus; or a value of the STA-ID field is a plurality of bits of an AID of the apparatus, and a value of the address field in the first HARQ field is an address of the first device.

In an optional embodiment, the PPDU is a trigger basic TB PPDU, the PPDU includes a second HARQ field, the second HARQ field is used to indicate to the first device whether the apparatus has sent the PPDU, and the second HARQ field is located between a next-generation long training field NG-LTF in the physical layer preamble in the PPDU and the A-MPDU in the PPDU.

In an optional embodiment, a response manner field in the second HARQ field is used to indicate a manner in which the first device responds to the A-MPDU.

In an optional embodiment, the PPDU is a TB PPDU, and an NG-STF and/or an NG-LTF in the PPDU are/is used to indicate to the first device that the apparatus has sent the TB PPDU.

In an optional embodiment, the PPDU is a TB PPDU, and at least one MPDU delimiter in the A-MPDU is used to indicate to the first device that the apparatus has sent the TB PPDU.

In an optional embodiment, a block acknowledgment starting sequence control field in the BA frame is used to indicate at least one of a reason why all the MPDUs included in the A-MPDU are incorrectly received, a redundancy version used for next transmission, and a modulation and coding scheme order used for next transmission.

It should be understood that the retransmission apparatus 500 provided in this embodiment of this application is the second device in the foregoing method, and has any function of the second device in the foregoing method. For specific details, refer to the foregoing method. Details are not described herein again.

The foregoing describes the retransmission apparatus applied to the first device and the retransmission apparatus applied to the second device in the embodiments of this application. The following describes possible product forms of the retransmission apparatus applied to the first device and the retransmission apparatus applied to the second device. It should be understood that any product having features of retransmission apparatus applied to the first device described in FIG. 21, and any product having features of retransmission apparatus applied to the second device described in FIG. 22, all fall within the protection scope of this application. It should be further understood that the following description is merely an example, and is not limited to a product form of the retransmission apparatus applied to the first device and a product form of the retransmission apparatus applied to the second device in this embodiment of this application.

In a possible product form, the retransmission apparatus applied to the first device and the retransmission apparatus applied to the second device described in this embodiment of this application may be implemented by using a general bus architecture.

The retransmission apparatus applied to the first device includes a processor and a transceiver that is internally connected to and communicates with the processor. The processor is configured to generate a block acknowledgment BA frame, where a first value of an acknowledgment type field and a second value of a traffic identifier field in the BA frame are used to jointly indicate that all media access control protocol data units MPDUs included in an aggregated media access control protocol data unit A-MPDU received by the first device are incorrectly received. The transceiver is configured to send the BA frame to the second device. Optionally, the retransmission apparatus applied to the first device may further include a memory, and the memory is configured to store instructions executed by the processor.

The retransmission apparatus applied to the second device includes a processor and a transceiver that is internally connected to and communicated with the processor. The transceiver is configured to receive a block acknowledgment BA frame sent by the first device, where a first value of an acknowledgment type field and a second value of a traffic identifier field in the BA frame are used to jointly indicate that all media access control protocol data units MPDUs included in an aggregated media access control protocol data unit A-MPDU received by the first device are incorrectly received. The processor is configured to control, based on the BA frame, the transceiver to perform hybrid automatic repeat request HARQ retransmission. Optionally, the retransmission apparatus applied to the second device may further include a memory, and the memory is configured to store instructions executed by the processor.

In a possible product form, the retransmission apparatus applied to the first device and the retransmission apparatus applied to the second device described in this embodiment of this application may be implemented by a general-purpose processor.

A general-purpose processor for implementing the retransmission apparatus applied to the first device includes a processing circuit and a communications interface that is internally connected to and communicated with the processing circuit. The processing circuit is configured to generate a block acknowledgment BA frame, where a first value of an acknowledgment type field and a second value of a traffic identifier field in the BA frame are used to jointly indicate that all media access control protocol data units MPDUs included in an aggregated media access control protocol data unit A-MPDU received by the apparatus are incorrectly received. The communications interface sends the BA frame to the second device. Optionally, the general-purpose processor may further include a storage medium. The storage medium is configured to store instructions executed by the processing circuit.

The general-purpose processor for implementing the retransmission apparatus applied to the first device includes a processing circuit and a communications interface that is internally connected to and communicated with the processing circuit. The communications interface is configured to receive a block acknowledgment BA frame sent by the first device, where a first value of an acknowledgment type field and a second value of a traffic identifier field in the BA frame are used to jointly indicate that all media access control protocol data units MPDUs included in an aggregated media access control protocol data unit A-MPDU received by the first device are incorrectly received. The processing circuit is configured to control, based on the BA frame, the communications interface to perform hybrid automatic repeat request HARQ retransmission.

In a possible product form, the retransmission apparatus applied to the first device and the retransmission apparatus applied to the second device described in this embodiment of this application may be further implemented by using the following: one or more FPGAs (Field Programmable Gate Arrays), PLDs (Programmable Logic Devices), controllers, state machines, gate logic, discrete hardware components, any other suitable circuits, or any combination of circuits capable of performing various functions described throughout this application.

It should be understood that the apparatus for retransmission applied to the first device and the apparatus for retransmission applied to the second device in the foregoing product forms respectively have any functions of the first device and the second device in the foregoing method embodiments. Details are not described herein again.

It should be understood that the term "and/or" in this specification describes only an association relationship for describing associated objects and represents that three relationships may exist. For example, A and/or B may represent the following three cases: Only A exists, both A and B exist, and only B exists. In addition, the character "/" in this specification generally indicates an "or" relationship between the associated objects.

A person of ordinary skill in the art may be aware that, in combination with the examples described in the embodiments disclosed in this specification, method steps and units may be implemented by electronic hardware, computer software, or a combination thereof. To clearly describe the interchangeability between the hardware and the software, the foregoing has generally described steps and compositions of each embodiment according to functions. Whether the functions are performed by hardware or software depends on particular applications and design constraint conditions of the technical solutions. A person of ordinary skill in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing described system, apparatuses, and units, refer to a corresponding process in the foregoing method embodiments, and details are not described herein again.

In the several embodiments provided in this application, it should be understood that the disclosed systems, apparatuses, and methods may be implemented in other manners. For example, the described apparatus embodiment is merely an example. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces, indirect couplings or communication connections between the apparatuses or units, or electrical connections, mechanical connections, or connections in other forms.

The units described as separate parts may or may not be physically separate. Parts displayed as units may or may not be physical units, and may be located in one position or may be distributed on a plurality of network units. Some or all of the units may be selected according to actual requirements to achieve the objectives of the solutions of the embodiments in this application.

In addition, functional units in the embodiments of this application may be integrated into one processing unit, or each of the units may exist alone physically, or two or more units are integrated into one unit. The integrated unit may be implemented in a form of hardware, or may be implemented in a form of a software functional unit.

When the integrated unit is implemented in the form of a software functional unit and sold or used as an independent product, the integrated unit may be stored in a computer-readable storage medium. Based on such an understanding, the technical solutions of this application essentially, or the part contributing to the conventional technology, or all or some of the technical solutions may be implemented in the form of a software product. The software product is stored in a storage medium and includes several instructions for instructing a computer device (which may be a personal computer, a server, or a network device) to perform all or some of the steps of the methods described in the embodiments of this application. The foregoing storage medium includes: any medium that can store program code, such as a USB flash drive, a removable hard disk, a read-only memory (read-only memory, ROM), a random access memory (random access memory, RAM), a magnetic disk, or an optical disc.

The foregoing description i merely specific embodiments of this application, but are not intended to limit the protection scope of this application. Any modification or replacement readily figured out by a person skilled in the art within the technical scope disclosed in this application shall fall within the protection scope of this application. Therefore, the protection scope of this application shall be subject to the protection scope of the claims.

## Claims

1. A retransmission method, comprising:
generating, by a first device, a block acknowledgment BA frame, wherein a first value of an acknowledgment type field and a second value of a traffic identifier field in the BA frame are used to jointly indicate that all media access control protocol data units MPDUs comprised in an aggregated media access control protocol data unit A-MPDU received by the first device are incorrectly received; and
sending, by the first device, the BA frame to the second device.

2. The method according to claim 1, wherein before the generating, by a first device, a BA frame, the method further comprises:
receiving, by the first device, a physical layer protocol data unit PPDU sent by the second device, wherein the PPDU comprises a physical layer preamble and the A-MPDU.

3. The method according to claim 2, wherein the physical layer preamble in the PPDU comprises a first hybrid automatic repeat request HARQ field, and an address field in the first HARQ field is used to indicate to the first device whether the PPDU is sent to the first device.

4. The method according to claim 3, wherein a response manner field in the first HARQ field is used to indicate a manner in which the first device responds to the A-MPDU.

5. The method according to claim 3 or 4, wherein the PPDU is a single user SU PPDU; and the first HARQ field is located between a next-generation signal field A NG-SIG-A and a next-generation short training field NG-STF in the physical layer preamble in the PPDU, the first HARQ field is located in an NG-SIG-A in the physical layer preamble in the PPDU, or the first HARQ field is located between a next-generation long training field NG-LTF in the physical layer preamble in the PPDU and the A-MPDU in the PPDU.

6. The method according to claim 5, wherein the address field comprises an address of the first device and an address of the second device.

7. The method according to claim 3 or 4, wherein the PPDU is a multi-user MU PPDU; and the first HARQ field is located between a next-generation long training field NG-LTF in the physical layer preamble in the PPDU and the A-MPDU in the PPDU, or the first HARQ field is located in a user information field in a next-generation signal field B NG-SIG-B in the physical layer preamble in the PPDU.

8. The method according to claim 7, wherein a station identifier STA-ID field in the user information field and the address field in the first HARQ field are used to indicate to the first device whether the PPDU is sent to the first device.

9. The method according to claim 8, wherein a value of the STA-ID field is a plurality of bits of an association identifier AID of the first device, and a value of the address field in the first HARQ field is an address of the second device; a value of the STA-ID field is a plurality of bits of an association identifier AID of the second device, and a value of the address field in the first HARQ field is an address of the second device; or a value of the STA-ID field is a plurality of bits of an association identifier AID of the second device, and a value of the address field in the first HARQ field is an address of the first device.

10. The method according to claim 2, wherein the PPDU is a trigger basic TB PPDU, the PPDU comprises a second HARQ field, the second HARQ field is used to indicate to the first device whether the second device has sent the PPDU, and the second HARQ field is located between a next-generation long training field NG-LTF in a physical layer preamble in the TB PPDU and the A-MPDU in the TB PPDU.

11. The method according to claim 10, wherein a response manner field in the second HARQ field is used to indicate a manner in which the first device responds to the A-MPDU.

12. The method according to claim 2, wherein the PPDU is a trigger basic TB PPDU, and an NG-STF and/or an NG-LTF in the PPDU are/is used to indicate to the first device that the second device has sent the TB PPDU.

13. The method according to claim 2, wherein the PPDU is a trigger basic TB PPDU, and at least one MPDU delimiter in the A-MPDU is used to indicate to the first device that the second device has sent the TB PPDU.

14. The method according to any one of claims 1 to 13, wherein a block acknowledgment starting sequence control field in the BA frame is used to indicate at least one of a reason why all the MPDUs comprised in the A-MPDU are incorrectly received, a redundancy version used for next transmission, and a modulation and coding scheme order used for next transmission.

15. A retransmission method, comprising:
receiving, by a second device, a block acknowledgment BA frame sent by a first device, wherein a first value of an acknowledgment type field and a second value of a traffic identifier field in the BA frame are used to jointly indicate that all media access control protocol data units MPDUs comprised in an aggregated media access control protocol data unit A-MPDU received by the first device are incorrectly received; and
performing, by the second device, hybrid automatic repeat request HARQ retransmission based on the BA frame.

16. The method according to claim 15, wherein before the receiving, by a second device, a BA frame sent by a first device, the method further comprises:
sending, by the second device, a physical layer protocol data unit PPDU to the first device, wherein the PPDU comprises a physical layer preamble and the A-MPDU.

17. The method according to claim 16, wherein the physical layer preamble in the PPDU comprises a first HARQ field, and an address field in the first HARQ field is used to indicate to the first device whether the PPDU is sent to the first device.

18. The method according to claim 17, wherein a response manner field in the first HARQ field is used to indicate a manner in which the first device responds to the A-MPDU.

19. The method according to claim 17 or 18, wherein the PPDU is a single user SU PPDU; and the first HARQ field is located between a next-generation signal field NG-SIG-A and a next-generation short training field NG-STF in the physical layer preamble in the PPDU, the first HARQ field is located in an NG-SIG-A in the physical layer preamble in the PPDU, or the first HARQ field is located between a next-generation long training field NG-LTF in the physical layer preamble in the PPDU and the A-MPDU in the PPDU.

20. The method according to claim 19, wherein the address field comprises an address of the first device and an address of the second device.

21. The method according to claim 17 or 18, wherein the PPDU is a multi-user MU PPDU; and the first HARQ field is located between a next-generation long training field NG-LTF in the physical layer preamble in the PPDU and the A-MPDU in the PPDU, or the first HARQ field is located in a user information field in a next-generation signal field NG-SIG-B in the physical layer preamble in the PPDU.

22. The method according to claim 21, wherein a station identifier STA-ID field in the user information field and the address field in the first HARQ field are used to indicate to the first device whether the PPDU is sent to the first device.

23. The method according to claim 22, wherein a value of the STA-ID field is a plurality of bits of an association identifier AID of the first device, and a value of the address field in the first HARQ field is an address of the second device; a value of the STA-ID field is a plurality of bits of an AID of the second device, and a value of the address field in the first HARQ field is an address of the second device; or a value of the STA-ID field is a plurality of bits of an AID of the second device, and a value of the address field in the first HARQ field is an address of the first device.

24. The method according to claim 16, wherein the PPDU is a trigger basic TB PPDU, the PPDU comprises a second HARQ field, the second HARQ field is used to indicate to the first device whether the second device has sent the PPDU, and the second HARQ field is located between a next-generation long training field NG-LTF in the physical layer preamble in the PPDU and the A-MPDU in the PPDU.

25. The method according to claim 24, wherein a response manner field in the second HARQ field is used to indicate a manner in which the first device responds to the A-MPDU.

26. The method according to claim 16, wherein the PPDU is a trigger basic TB PPDU, and an NG-STF and/or an NG-LTF in the PPDU are/is used to indicate to the first device that the second device has sent the TB PPDU.

27. The method according to claim 16, wherein the PPDU is a TB PPDU, and at least one MPDU delimiter in the A-MPDU is used to indicate to the first device that the second device has sent the TB PPDU.

28. The method according to any one of claims 15 to 27, wherein a block acknowledgment starting sequence control field in the BA frame is used to indicate at least one of a reason why all the MPDUs comprised in the A-MPDU are incorrectly received, a redundancy version used for next transmission, and a modulation and coding scheme order used for next transmission.

29. A retransmission apparatus, comprising a unit configured to perform the method according to any one of claims 1 to 14.

30. A retransmission apparatus, comprising a unit configured to perform the method according to any one of claims 15 to 28.

31. An apparatus, comprising a processor and a memory, wherein the processor is coupled to the memory, the memory is configured to store a computer program or instructions, and the processor is configured to execute the computer program or the instructions in the memory, so that the method according to any one of claims 1 to 14 is performed.

32. An apparatus, comprising a processor and a memory, wherein the processor is coupled to the memory, the memory is configured to store a computer program or instructions, and the processor is configured to execute the computer program or the instructions in the memory, so that the method according to any one of claims 15 to 28 is performed.

33. A computer-readable storage medium, wherein the computer-readable storage medium stores a program or instructions used to implement the method according to any one of claims 1 to 14.

34. A computer-readable storage medium, wherein the computer-readable storage medium stores a program or instructions used to implement the method according to any one of claims 15 to 28.
